(19) Europäisches Patentamt
European Patent Office
Office européen des brevets

(11) EP 4 685 202 A1

(12) **EUROPEAN PATENT APPLICATION**
published in accordance with Art. 153(4) EPC

(43) Date of publication:
**28.01.2026 Bulletin 2026/05**

(21) Application number: **24774794.2**

(22) Date of filing: **13.03.2024**

(51) International Patent Classification (IPC):
***C09D 183/04*** (2006.01) ***B05D 3/12*** (2006.01)
***B05D 5/00*** (2006.01) ***B05D 7/24*** (2006.01)
***C09D 7/63*** (2018.01) ***C09D 191/06*** (2006.01)

(52) Cooperative Patent Classification (CPC):
**B05D 3/12; B05D 5/00; B05D 7/24; C09D 7/63; C09D 183/04; C09D 191/06**

(86) International application number:
**PCT/JP2024/009836**

(87) International publication number:
**WO 2024/195656 (26.09.2024 Gazette 2024/39)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **20.03.2023 JP 2023044706**

(71) Applicant: **Chugoku Marine Paints, Ltd.**
**Hiroshima 739-0652 (JP)**

(72) Inventors:
- **SATO Hidehiko**
  **Otake-shi, Hiroshima 739-0652 (JP)**
- **AOI Atsushi**
  **Otake-shi, Hiroshima 739-0652 (JP)**

(74) Representative: **Hoffmann Eitle**
**Patent- und Rechtsanwälte PartmbB**
**Arabellastraße 30**
**81925 München (DE)**

(54) **ANTI-FOULING COATING MATERIAL COMPOSITION**

(57) The present invention has an object to provide an antifouling coating composition that provides an antifouling coating film superior in antifouling performance, that is superior in production workability and in dispersibility, and that is superior in storage stability so that generation of aggregates is prevented even after storage and furthermore, a high anti-sagging property is maintained even after storage, and a method for producing the same, and to provide an antifouling coating film obtained from the antifouling coating composition, a substrate with an antifouling coating film, including the antifouling coating film, and a method for producing the same.

The antifouling coating composition of the present invention contains a curable polyorganosiloxane (A), a pyrithione metal salt (B), and an oxidized polyethylene wax (C), and satisfies at least one of the following Conditions A and B:
Condition A: the pyrithione metal salt (B) in the antifouling coating composition has a median diameter (D50) of 5.0 μm or less
Condition B: the pyrithione metal salt (B) that is a raw material has a median diameter (D50) of 3.0 μm or less.

EP 4 685 202 A1

## Description

### Technical Field

The present invention relates to an antifouling coating composition, a method for producing the same, and an antifouling coating film obtained by using the antifouling coating composition, and also relates to a substrate with an antifouling coating film and a method for producing the same.

### Background Art

A polyorganosiloxane-based antifouling coating film has a lower environmental load as compared with conventional hydration-type, hydrolysis-type, and other antifouling coating films, and therefore, is widely used for preventing adhesion of aquatic organisms to ships, underwater structures, fishing materials, and the like. Furthermore, from the viewpoint of enhancing the antifouling performance against microscopic organisms, a polyorganosiloxane-based antifouling coating film is used with an antifouling agent (in particular, a pyrithione metal salt) contained therein.

Patent Literature 1 discloses, with the aim of providing an antifouling coating composition that can form a coating film having a high antifouling performance against slime (anti-slime performance) and superior in strength, rubber properties, and the like, and that has a suitable viscosity (a atomization property and coating film surface leveling property during a spray coating operation) and an anti-sagging property, and further, has such a high storage stability that deterioration in those characteristics is reduced, an antifouling coating composition characterized by containing (A) a diorganopolysiloxane having at least two silanol groups in one molecule, (B) an organosilane having at least two hydrolyzable groups in one molecule and/or a partially hydrolyzed condensate thereof, and (C) a pyrithione metal salt.

### Citation List

### Patent Literature

Patent Literature 1: WO 2014/077205 A

### Summary of Invention

### Technical Problem

Regarding a pyrithione metal salt, a product having a small particle size of approximately 3 μm or less has become the main stream in recent years, and consequently, there may arise problems of a lowered dispersibility, an increased viscosity of an antifouling coating material, a lowered storage stability, and the like. Accordingly, in order to apply a pyrithione metal salt having a small particle size to an antifouling coating composition containing a curable polyorganosiloxane, it is required to enhance the dispersibility. However, Patent Literature 1 has not studied about the lowering of the dispersibility involved in the reduction in the particle size of the pyrithione metal salt.

The present invention has an object to provide an antifouling coating composition that provides an antifouling coating film superior in antifouling performance, that is superior in production workability and in dispersibility, and that is superior in storage stability so that generation of aggregates is prevented even after storage and furthermore, a high anti-sagging property is maintained even after storage, and a method for producing the antifouling coating composition. The present invention further has an object to provide an antifouling coating film obtained from the antifouling coating composition, a substrate with an antifouling coating film having the antifouling coating film and a method for producing the substrate.

### Solution to Problem

As a result of intensive studies in view of the above problem, the present inventors have found that the problem can be solved by using an oxidized polyethylene wax in a polyorganosiloxane-based antifouling coating material containing a pyrithione metal salt with a small particle size, thus completing the present invention.

The present invention relates to the following [1] to [14].

[1] An antifouling coating composition containing a curable polyorganosiloxane (A), a pyrithione metal salt (B), and an oxidized polyethylene wax (C),
the antifouling coating composition satisfying at least one of the following Conditions A and B:

Condition A: the pyrithione metal salt (B) in the antifouling coating composition has a median diameter (D50) of 5.0 μm or less

Condition B: the pyrithione metal salt (B) that is a raw material has a median diameter (D50) of 3.0 μm or less

[2] The antifouling coating composition according to [1], in which the pyrithione metal salt (B) is copper pyrithione.
[3] The antifouling coating composition according to [1] or [2], further containing a slipping agent (D).
[4] The antifouling coating composition according to any one of [1] to [3], further containing a coloring pigment (E).
[5] The antifouling coating composition according to [4], in which the coloring pigment (E) contains an organic pigment.
[6] The antifouling coating composition according to any one of [1] to [5], in which the curable polyorganosiloxane (A) is a compound represented by the following formula (A1).

[Chem. 1]

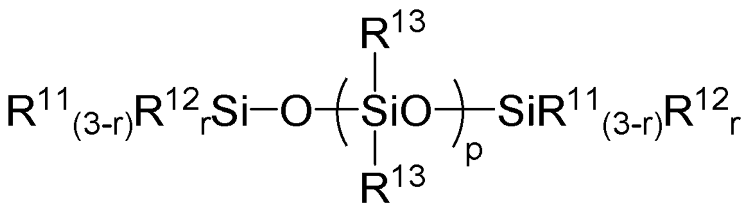

(A1)

(In the formula (A1), $R^{11}$ and $R^{13}$ each independently represent a hydrogen atom, or an alkyl group, an alkenyl group, an aryl group, an aralkyl group, or a halogenated alkyl group each having 1 to 16 carbon atoms, $R^{12}$ each independently represents a hydroxy group or a hydrolyzable group, r represents an integer of 1 to 3, and p represents 10 to 10,000.)
[7] The antifouling coating composition according to any one of [1] to [6], in which a content of the curable polyorganosiloxane (A) is 45% by mass or more and 85% by mass or less in a solid content of the antifouling coating composition.
[8] The antifouling coating composition according to any one of [1] to [7], in which a content of the pyrithione metal salt (B) is 0.5% by mass or more and 15% by mass or less in the solid content of the antifouling coating composition.
[9] The antifouling coating composition according to any one of [1] to [8], in which a content of the oxidized polyethylene wax (C) is 0.1% by mass or more and 3.0% by mass or less in the solid content of the antifouling coating composition.
[10] An antifouling coating film formed from the antifouling coating composition according to any one of [1] to [9].
[11] A substrate with an antifouling coating film, including a substrate and the antifouling coating film according to [10] provided on a surface of the substrate.
[12] A method for producing a substrate with an antifouling coating film, the method including the following (1-1) and (1-2), or the following (2-1) and (2-2):

(1-1) a step of coating or impregnating a surface of a substrate with the antifouling coating composition according to any one of [1] to [9] to provide a coated article or an impregnated article
(1-2) a step of drying the coated article or impregnated article obtained in the step (1-1) to form an antifouling coating film
(2-1) a step of drying the antifouling coating composition according to any one of [1] to [9] to form an antifouling coating film
(2-2) a step of bonding the antifouling coating film obtained in the step (2-1) to a substrate.

[13] A method for producing the antifouling coating composition according to any one of [1] to [9], the method including a Step a and a Step b in this order:

Step a: a step of preparing a mixture A that contains the pyrithione metal salt (B) and the oxidized polyethylene wax (C)
Step b: a step of mixing the mixture A obtained in the Step a and the curable polyorganosiloxane (A) to prepare an antifouling coating composition.

[14] The method for producing the antifouling coating composition according to [13], in which in the Step a, the pyrithione metal salt (B) that is a raw material has a median diameter (D50) of 3.0 μm or less.

Advantageous Effects of Invention

The present invention provides an antifouling coating composition that provides an antifouling coating film superior in antifouling performance, that is superior in production workability and in dispersibility, and that is superior in storage stability so that generation of aggregates is prevented even after storage and furthermore, a high anti-sagging property is maintained even after storage, and a method for producing the antifouling coating composition. The present invention further provides an antifouling coating film obtained from the antifouling coating composition, a substrate with an antifouling coating film having the antifouling coating film, and a method for producing the substrate.

Description of Embodiments

The antifouling coating composition and the method for producing the antifouling coating composition, the antifouling coating film using the antifouling coating composition, and the substrate with an antifouling coating film and the method for producing the substrate of the present invention will be described in detail below.

[Antifouling Coating Composition]

The antifouling coating composition of the present invention contains a curable polyorganosiloxane (A), a pyrithione metal salt (B), and an oxidized polyethylene wax (C) and satisfies at least one of the following Conditions A and B.

Condition A: the pyrithione metal salt (B) in the antifouling coating composition has a median diameter (D50) of 5.0 μm or less.

Condition B: the pyrithione metal salt (B) that is a raw material has a median diameter (D50) of 3.0 μm or less.

According to the antifouling coating composition of the present invention, an antifouling coating composition that provides an antifouling coating film superior in antifouling performance, that is superior in production workability and in dispersibility, and that is superior in storage stability so that generation of aggregates is prevented even after storage and furthermore, a high anti-sagging property is maintained even after storage is provided.

Although the detailed reason why the above effects are achieved is unclear, it is considered that the antifouling coating composition is superior in the antifouling performance by containing the curable polyorganosiloxane (A) and the pyrithione metal salt (B).

It is also considered that, by containing the oxidized polyethylene wax (C), even if the pyrithione metal salt (B) in the antifouling coating composition and/or the pyrithione metal salt (B) that is a raw material have small particle sizes, an increase in the viscosity was prevented, and thus, the antifouling coating composition was superior in the production workability during preparation of a coating material and was superior in the dispersibility, generation of aggregates was prevented even after storage and furthermore, a high anti-sagging property was maintained even after storage. Note that the above effects were achieved upon in a combination of the curable polyorganosiloxane (A), the pyrithione metal salt (B), and the oxidized polyethylene wax (C).

The ingredients contained in the antifouling coating composition will be described below.

[Curable Polyorganosiloxane (A)]

The antifouling coating composition of this embodiment contains a curable polyorganosiloxane (A) for the purpose of enhancing the antifouling performance of the antifouling coating film.

An example of the curable polyorganosiloxane (A) used in this embodiment is a compound that has a main chain having a polyorganosiloxane structure and a reactive group(s), in which the reactive groups are reacted with each other or the reactive group is reacted with a reactive group of an organosilicon crosslinking agent (I) described later so as to cure through the formation of a three-dimensional crosslinked structure. The reactive group may also be reacted with a silane coupling agent described later.

Examples of the structure of the polyorganosiloxane structure include a polydimethylsiloxane structure and a polymethylphenylsiloxane structure, in which a polydimethylsiloxane structure is preferred, and an alkylene group, a polyoxyalkylene group, or the like may exist in a block form.

As a linking moiety between the main chain and the reactive group, for example, an alkylene group or a polyoxyalkylene group may exist.

The reactive group is an addition reactive group or a condensation reactive group, and a condensation reactive group is preferred from the viewpoint that the influence of cure inhibiting substances is small and a stable reaction rate can be obtained in the curing reaction.

Examples of the condensation reactive group include a silanol group, an oximesilyl group, an acyloxysilyl group, an alkoxysilyl group, an alkenyloxysilyl group, an aminosilyl group, and an amidosilyl group, in which a silanol group, an

oximesilyl group, an acyloxysilyl group, an alkoxysilyl group, and an alkenyloxysilyl group are preferred, a silanol group, an oximesilyl group, an alkoxysilyl group, and an alkenyloxysilyl group are more preferred, a silanol group, an oximesilyl group, an alkoxysilyl group, and an alkenyloxysilyl group are further preferred, and a silanol group and an oximesilyl group are furthermore preferred.

As an oxime group, an oxime group having 1 to 10 carbon atoms is preferred, a dimethyl ketoxime group, a methyl ethyl ketoxime group, a diethyl ketoxime group, a methyl isopropyl ketoxime group, and a methyl isobutyl ketoxime group are more preferred, and a methyl ethyl ketoxime group and a methyl isobutyl ketoxime group are further preferred.

As an alkoxy group, an alkoxy group having 1 to 6 carbon atoms is preferred, a methoxy group, an ethoxy group, a propoxy group, and a butoxy group are more preferred, a methoxy group and an ethoxy group are further preferred, and a methoxy group is furthermore preferred.

Two or more oxime groups or alkoxy groups are preferably bonded to one silicon atom in the condensation reactive group.

Examples of the position of the reactive group include the direct bond to the silicon atom in the main chain, the inside of the side chain, the both ends of the main chain, and one of the ends of the main chain, in which the both ends of the main chain are preferred.

The curable polyorganosiloxane (A) is preferably a curable polyorganosiloxane having a reactive group. Specific examples thereof include a silanol group-containing silicone, an oximesilyl group-containing silicone, an alkoxy group-containing silicone, and an enol silyl ether group-containing silicone, in which a silanol group-containing silicone, an oximesilyl group-containing silicone, and an alkoxy group-containing silicone are preferred, and a silanol group-containing silicone and an oximesilyl group-containing silicone are more preferred.

The curable polyorganosiloxane (A) having a reactive group is preferably a compound that forms a silicone rubber through curing, and for example, is preferably a compound represented by the following formula (A1):

[Chem. 2]

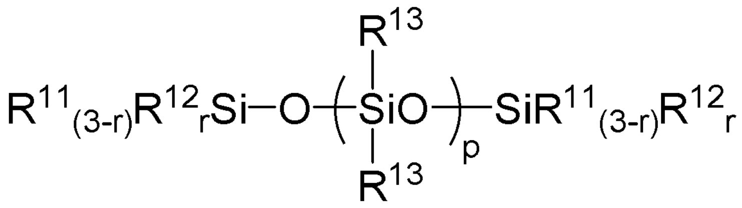

(A1)

(In the formula (A1), $R^{11}$ and $R^{13}$ each independently represent a hydrogen atom, or an alkyl group, an alkenyl group, an aryl group, an aralkyl group, or a halogenated alkyl group each having 1 to 16 carbon atoms, $R^{12}$ each independently represents a hydroxy group or a hydrolyzable group. r represents an integer of 1 to 3, and p represents 10 to 10,000.)

In the formula (A1), $R^{11}$ and $R^{13}$ each independently represent a hydrogen atom, or an alkyl group, an alkenyl group, an aryl group, an aralkyl group, an alkoxy group, or a halogenated alkyl group, each group having 1 to 16 carbon atoms.

The alkyl group for $R^{11}$ and $R^{13}$ has 1 to 16 carbon atoms, and examples thereof include a methyl group, an ethyl group, a propyl group, a butyl group, a pentyl group, a hexyl group, and a heptyl group.

The alkenyl group for $R^{11}$ and $R^{13}$ has 2 to 16 carbon atoms, and examples thereof include a vinyl group, an allyl group, a propenyl group, an isopropenyl group, a butenyl group, an isobutenyl group, a pentenyl group, a heptenyl group, a hexenyl group, and a cyclohexenyl group.

The aryl group for $R^{11}$ and $R^{13}$ has 6 to 16 carbon atoms, and may have a substituent, such as an alkyl group, on the aromatic ring, and examples thereof include a phenyl group, a tolyl group (methylphenyl group), a xylyl group (dimethylphenyl group), and a naphthyl group.

The aralkyl group for $R^{11}$ and $R^{13}$ has 7 to 16 carbon atoms, and examples thereof include a benzyl group, a 2-phenylethyl group, a 2-naphthylethyl group, and a diphenylmethyl group.

The halogenated alkyl group for $R^{11}$ and $R^{13}$ has 1 to 16 carbon atoms, and examples thereof include groups obtained by replacing a part or the whole of the hydrogen atoms contained in the alkyl groups by a halogen atom, such as a fluorine atom, a chlorine atom, a bromine atom, and an iodine atom.

Among the above, $R^{11}$ in the formula (A1) preferably represents a hydrogen atom, an alkyl group, an alkenyl group, or an aryl group, more preferably represents a methyl group, an ethyl group, a vinyl group, or a phenyl group, and further preferably represents a methyl group or a vinyl group.

$R^{13}$ in the formula (A1) preferably represents a hydrogen atom, an alkyl group, an alkenyl group, or an aryl group, more preferably represents a methyl group, an ethyl group, a vinyl group, or a phenyl group, further preferably represents a methyl group, an ethyl group, or a phenyl group, and furthermore preferably represents a methyl group or a phenyl group.

The multiple groups represented by $R^{13}$ may be the same as or different from each other. In the case where the multiple groups represented by $R^{11}$ exist, the groups may be the same as or different from each other.

In the formula (A1), $R^{12}$ each independently represent a hydroxy group or a hydrolyzable group.

Examples of the hydrolyzable group for $R^{12}$ include an oxime group, an acyloxy group, an alkoxy group, an alkenyloxy group, an amino group, an amido group, and an aminoxy group.

The oxime group for $R^{12}$ is preferably an oxime group having 1 to 10 carbon atoms in total, and examples thereof include a dimethyl ketoxime group, a methyl ethyl ketoxime group, a diethyl ketoxime group, a methyl isopropyl ketoxime group, and a methyl isobutyl ketoxime group.

The acyloxy group (RC(=O)O-) for $R^{12}$ is preferably an aliphatic acyloxy group having 1 to 10 carbon atoms in total or an aromatic acyloxy group having 7 to 12 carbon atoms in total, and examples thereof include an acetoxy group, a propionyloxy group, a butylyloxy group, and a benzoyloxy group.

The alkoxy group for $R^{12}$ is preferably an alkoxy group having 1 to 10 carbon atoms in total. In the alkoxy group for $R^{12}$, one or more oxygen atoms may be present between one or more carbon atoms.

Specific examples of the alkoxy group for $R^{12}$ include a methoxy group, an ethoxy group, a propoxy group, a butoxy group, a methoxyethoxy group, and an ethoxyethoxy group.

The alkenyloxy group for $R^{12}$ is preferably an alkenyloxy group having 3 to 10 carbon atoms, and examples thereof include an isopropenyloxy group, an isobutenyloxy group, and a 1-ethyl-2-methylvinyloxy group.

The amino group for $R^{12}$ is preferably an amino group having 1 to 10 carbon atoms, and examples thereof include an N-methylamino group, an N-ethylamino group, an N-propylamino group, an N-butylamino group, an N,N-dimethylamino group, an N,N-diethylamino group, and a cyclohexylamino group.

The amido group for $R^{12}$ is preferably an amido group having 2 to 10 carbon atoms in total, and examples thereof include an N-methylacetamide group, an N-ethylacetamide group, and an N-methylbenzamide group.

The aminoxy group for $R^{12}$ is preferably an aminoxy group having 2 to 10 carbon atoms in total, and examples thereof include an N,N-dimethylaminoxy group and an N,N-diethylaminoxy group.

Among them, $R^{12}$ in the formula (A1) preferably represents a hydroxy group, an oxime group, or an alkoxy group, more preferably represents a hydroxy group or an oxime group, and further preferably represents a hydroxy group, a methyl ethyl ketoxime group, or a methyl isobutyl ketoxime group, in point of forming the antifouling coating film superior in curability and antifouling performance.

The multiple groups represented by $R^{12}$ may be the same as or different from each other.

In the formula (A1), r represents an integer of 1 to 3.

In the case where $R^{12}$ represents a hydroxy group, r preferably represents 1, and in the case where $R^{12}$ represents a substituent other than a hydroxy group, r preferably represents 2.

In the formula (A1), p represents a number of 10 to 10,000, and preferably 100 to 1,000, and may be appropriately regulated to satisfy the weight average molecular weight described below.

p means the average repetition number of the groups $-(SiR^{13}{}_2-O)-$.

The weight average molecular weight (Mw) of the curable polyorganosiloxane (A) is preferably 500 or more, more preferably 5,000 or more, further preferably 10,000 or more, furthermore preferably 15,000 or more, and furthermore preferably 20,000 or more, and is preferably 1,000,000 or less, more preferably 100,000 or less, further preferably 50,000 or less, and furthermore preferably 40,000 or less, from the viewpoint of enhancing the workability in producing the antifouling coating composition and the viewpoint of enhancing the coating workability and curability of the antifouling coating composition and the strength of the coating film formed therewith.

In this embodiment, the "weight average molecular weight (Mw)" and the "number average molecular weight (Mn)" described later are measured by GPC (gel permeation chromatograph) and calculated by converting based on the standard polystyrene having known molecular weights.

The viscosity at 25°C of the curable polyorganosiloxane (A) is preferably 20 mPa·s or more, more preferably 100 mPa·s or more, further preferably 500 mPa·s or more, and furthermore preferably 1,000 mPa·s or more, and is preferably 100,000 mPa·s or less, more preferably 10,000 mPa·s or less, further preferably 5,000 mPa·s or less, and furthermore preferably 3,000 mPa·s or less, from the viewpoint of enhancing the workability in producing the antifouling coating composition and the viewpoint of enhancing the coating workability and curability of the antifouling coating composition and the strength of the coating film formed therewith.

In the description herein, the viscosity at 25°C of the curable polyorganosiloxane (A) is a viscosity that is measured with a Brookfield rotational viscometer (for example, Type BM, manufactured by Tokyo Keiki Inc.)

The content of the curable polyorganosiloxane (A) in the antifouling coating composition is, from the viewpoint of enhancing the antifouling performance and strength of the antifouling coating film formed, preferably 25% by mass or more, more preferably 30% by mass or more, further preferably 35% by mass or more, and preferably 90% by mass or less, more preferably 70% by mass or less, further preferably 60% by mass or less.

The content of the curable polyorganosiloxane (A) in the solid content of the antifouling coating composition is preferably 45% by mass or more, more preferably 50% by mass or more, further preferably 55% by mass or more, and

preferably 85% by mass or less, more preferably 80% by mass or less, further preferably 75% by mass or less.

In the present description, the "solid content of the antifouling coating composition" refers to the ingredients excluding an organic solvent (F) described later and volatile ingredients contained as a solvent in the ingredients, and the "content in the solid content of the antifouling coating composition" can be calculated as a content in a solid content obtained by drying the antifouling coating composition in a hot air dryer at 125°C for 1 hour.

As the curable polyorganosiloxane (A), a commercially available product can be used. Examples of the commercially available product include "DMS-S35" manufactured by Gelest, Inc. and "KE-445" manufactured by Shin-Etsu Chemical Co., Ltd. As the curable polyorganosiloxane (A), the materials described in JP 2001-139816 A can also be used.

[Pyrithione Metal Salt (B)]

The antifouling coating composition of this embodiment contains a pyrithione metal salt (B) for the purpose of enhancing the antifouling performance of the antifouling coating film.

Examples of the pyrithione metal salt (B) include copper pyrithione and zinc pyrithione, and among them, from the viewpoint of the antifouling performance of the antifouling coating film, copper pyrithione is preferred.

The antifouling coating composition of this embodiment satisfies at least one of the following Conditions A and B.

Condition A: the pyrithione metal salt (B) in the antifouling coating composition has a median diameter (D50) of 5.0 μm or less.

Condition B: the pyrithione metal salt (B) that is a raw material has a median diameter (D50) of 3.0 μm or less.

When at least one of the Conditions A and B is satisfied, there has been a problem in that a mixture A, prepared in production, which contains the pyrithione metal salt (B) has a high viscosity, resulting in reduction in the production workability. In addition, there have also been a problem in that aggregates considered to be derived from the pyrithione metal salt (B) are generated after storage, resulting in reduction in the anti-sagging property, that is, reduction in the film thickness before drying at which sagging does not occur (the wet film thickness at sagging limit), and a problem of poor production workability of an antifouling coating film. In addition, there has been a problem of poor coating film appearance of the antifouling coating film caused by generation of the aggregates.

In this embodiment, from the viewpoint of solving the above problems, at least one of the Conditions A and B is satisfied, at least the Condition A is preferably satisfied, and both the Conditions A and B are more preferably satisfied.

The antifouling coating composition of this embodiment solves the problems as described above.

Regarding the Condition A, the lower limit of the median diameter of the pyrithione metal salt (B) in the coating composition is not particularly limited, but from the viewpoint of further preventing the occurrence of the above problems, is preferably 1.0 μm or more, more preferably 1.5 μm or more, further preferably 2.0 μm or more. When the upper limit of the median diameter is 5.0 μm or less, the occurrence of the above problems are remarkable, and when the upper limit is 4.8 μm or less, the occurrence of the above problems are more remarkable, and when the upper limit is 4.5 μm or less, the occurrence of the above problems are further remarkable.

Regarding the Condition B, the lower limit of the median diameter of the pyrithione metal salt (B) that is a raw material is not particularly limited, but from the viewpoint of further preventing the occurrence of the above problems, is preferably 0.5 μm or more, more preferably 1.0 μm or more, further preferably 1.5 μm or more. When the upper limit of the median diameter is 3.0 μm, the occurrence of the above problems is remarkable, when the upper limit is 2.5 μm or less, the occurrence of the above problems is more remarkable, and when the upper limit is 2.0 μm or less, the occurrence of the above problems is further remarkable.

The median diameter of the pyrithione metal salt (B) is measured by a method described in the section of Examples.

The content of the pyrithione metal salt (B) in the solid content of the antifouling coating composition is, from the viewpoint of obtaining an antifouling coating film superior in the antifouling performance, preferably 0.5% by mass or more, more preferably 1.0% by mass or more, further preferably 3.0% by mass or more, furthermore preferably 5.0% by mass or more, and from the viewpoints of the production workability, dispersibility, storage stability, and the like, preferably 15% by mass or less, more preferably 13% by mass or less, further preferably 10% by mass or less.

[Oxidized Polyethylene Wax (C)]

The antifouling coating composition of this embodiment contains an oxidized polyethylene wax (C). By containing the oxidized polyethylene wax (C), even when the pyrithione metal salt (B) used has a small particle diameter, that is, a median diameter of 3.0 μm or less, the antifouling coating composition is superior in the production workability and in the dispersibility, and further superior in the storage stability.

An example of the oxidized polyethylene wax (C) is a resin obtained by oxidizing polyethylene and introducing a polar group thereinto.

Such an oxidized polyethylene wax (C) may be synthesized by a conventionally known method or may be a commercially available product.

Examples of the commercially available product include "DISPARLON 4200-20" manufactured by Kusumoto Chemicals, Ltd. and "ASA D-120" manufactured by ITOH OIL

CHEMICALS CO., LTD.

As the oxidized polyethylene wax (C), one kind can be used alone or two or more kinds can be used in combination.

The acid value of the oxidized polyethylene wax (C) is preferably 10 mgKOH/g or more, more preferably 15 mgKOH/g or more, and preferably 40 mgKOH/g or less, more preferably 35 mgKOH/g or less. An acid value of the oxidized polyethylene wax (C) within the above range is preferable since an antifouling coating composition superior in the production easiness and superior in the dispersibility and the storage stability can be obtained.

The content of the oxidized polyethylene wax (C) (nonvolatile content) in the solid content of the antifouling coating composition is preferably 0.01% by mass or more, more preferably 0.1% by mass or more, further preferably 0.25% by mass or more, and preferably 3.0% by mass or less, more preferably 2.2% by mass or less, further preferably 1.5% by mass or less, furthermore preferably 1.0% by mass or less. A content of the oxidized polyethylene wax (C) in the solid content of the antifouling coating composition within the above range is preferable since an antifouling coating composition superior in the production easiness and superior in the dispersibility and the storage stability can be obtained.

The content of the oxidized polyethylene wax (C) (nonvolatile content) relative to 100 parts by mass of the pyrithione metal salt (B) is, for the same reason, preferably 0.1 parts by mass or more, more preferably 0.5 parts by mass or more, further preferably 1.0 part by mass or more, furthermore preferably 1.5 parts by mass or more, and preferably 50 parts by mass or less, more preferably 40 parts by mass or less, further preferably 30 parts by mass or less.

The presence or absence of the oxidized polyethylene wax (C) in the antifouling coating composition can be known by the following procedure: a sample obtained by removing a pigment from a xylene-insoluble ingredient of the antifouling coating composition by a solvent separation is converted into a methyl ester, and the thus obtained sample is subjected to a measurement using a high temperature gel permeation chromatography (high temperature GPC).

The antifouling coating composition of this embodiment preferably contains, besides the (A) to (C), another ingredient.

Examples of said another ingredient include a slipping agent (D), a coloring pigment (E), an organic solvent (F), silica particles (G), a curing catalyst (H), an organosilicon crosslinking agent (I), a silane coupling agent (J), an organism repellent (K) other than the pyrithione metal salt (B), a pigment other than the coloring pigment (E) and the silica particles (G), a dehydrating agent other than the organosilicon crosslinking agent (I), an anti-sagging agent and anti-settling agent other than the oxidized polyethylene wax (C), a wet dispersant other than the oxidized polyethylene wax (C), an enzyme, a flame retardant, and a thermal conductivity improver.

The antifouling coating composition of this embodiment preferably contains the slipping agent (D), the coloring pigment (E), the organic solvent (F), the silica particles (G), the curing catalyst (H), and the organosilicon crosslinking agent (I) to the extent that the effects of the present invention are not impaired.

[Slipping Agent (D)]

From the viewpoint of the coating workability and antifouling performance of the antifouling coating composition, the antifouling coating composition of the present invention contains a slipping agent (D).

The slipping agent (D) can impart a slipping property to the antifouling coating film formed to thereby enhance an aquatic-organisms adhesion inhibition (antifouling performance).

The slipping agent (D) preferably has a fluidity at 25°C, and more preferably is liquid. It is considered that, by the slipping agent having a fluidity, the mobility in the antifouling coating film can be increased to enhance an effect of giving slippage to a surface. In addition, the viscosity of the antifouling coating composition can be reduced to improve the applicability.

The slipping agent (D) is preferably one or more selected from an oil and a polymer that has a hydrophilic group.

Examples of the oil include a silicone oil, a paraffin oil, and an oil and fat, and among them, a silicone oil is preferred.

An example of the paraffin oil is liquid paraffin.

The oil and fat is an ester of a fatty acid and glycerol, and examples thereof include an animal oil and fat and a vegetable oil and fat.

Examples of the polymer having a hydrophilic group include an acrylic polymer having a hydrophilic group, a polyglycerol ester, and a polyalkylene glycol, and an acrylic polymer having a hydrophilic group is preferred.

The polyglycerol ester is preferably a polyglycerol fatty acid ester. The polyglycerol fatty acid ester is an ester of

polyglycerol and a fatty acid, and the fatty acid is preferably a saturated or unsaturated fatty acid having 8 or more and 24 or less carbon atoms, and examples thereof include caprylic acid, capric acid, lauric acid, myristic acid, palmitic acid, stearic acid, isostearic acid, behenic acid, oleic acid, linolic acid, and linoleic acid. The average repetition number of glycerol in the polyglycerol ester is preferably 3 or more and 100 or less, and more preferably 5 or more and 30 or less. The glycerol ester may be a monoester having one ester group, a diester having two ester groups, or a polyester having three or more ester groups. Examples of the polyglycerol fatty acid ester include S-face series manufactured by Sakamoto Yakuhin Kogyo Co., Ltd.

Examples of the polyalkylene glycol include polyethylene glycol, polypropylene glycol, a copolymer of ethylene glycol and propylene glycol, and an alkyl ether thereof.

In other words, the slipping agent (D) is preferably one or more selected from the group consisting of a silicone oil, a paraffin oil, an oil and fat, an acrylic polymer having a hydrophilic group, a polyglycerol ester, and a polyalkylene glycol, more preferably one or more selected from a silicone oil and an acrylic polymer having a hydrophilic group, and further preferably a silicone oil. In point of the production workability of the antifouling coating composition and the antifouling performance of the antifouling coating film formed, the slipping agent (D) preferably contains an acrylic polymer having a hydrophilic group, and more preferably contains both of a silicone oil and an acrylic polymer having a hydrophilic group.

A silicone oil (D1), an acrylic polymer having a hydrophilic group (D2), and a paraffin oil (D3) which are suitable examples of the slipping agent (D) will be described in detail below.

<Silicone oil (D1)>

Examples of the silicone oil (D1) used in the antifouling coating composition of the present invention include dimethylsilicone (polydimethylsiloxane, unmodified silicone) and a modified silicone. The modified silicone is obtained by substituting a part of the methyl groups of dimethylsilicone with an organic group other than a methyl group and may have a reactive group at one end.

Since a silicone oil has a low surface tension and the nature is less likely to change even in a low temperature environment or the like, a silicone oil easily migrates to the surface of the antifouling coating film and can efficiently improve the aquatic-organisms adhesion prevention (antifouling performance) and damage resistance.

When the silicone oil (D1) has a reactive group at one end, examples of the reactive group include a silanol group, an oximesilyl group, an acyloxysilyl group, an alkoxysilyl group, an alkenyloxysilyl group, an aminosilyl group, and an amidosilyl group, and a silanol group, an oximesilyl group, an acyloxysilyl group, an alkoxysilyl group, and an alkenyloxysilyl group are preferred, a silanol group, an oximesilyl group, an alkoxysilyl group, and an alkenyloxysilyl group are more preferred, a silanol group, an oximesilyl group, and an alkenyloxysilyl group are further preferred, and a silanol group and an oximesilyl group are furthermore preferred.

The oxime group is preferably an oxime group having 1 or more and 10 or less carbon atoms, more preferably a dimethyl ketoxime group, a methyl ethyl ketoxime group, a diethyl ketoxime group, a methyl isopropyl ketoxime group, and a methyl isobutyl ketoxime group, and further preferably a methyl isobutyl ketoxime group.

The alkoxy group is preferably an alkoxy group having 1 or more and 6 or less carbon atoms, more preferably a methoxy group, an ethoxy group, a propoxy group, and a butoxy group, further preferably a methoxy group and an ethoxy group, and furthermore preferably a methoxy group.

Two or more oxime groups or alkoxy groups may be bonded to one silicon atom, and it is preferred that two or more oxime groups or alkoxy groups are bonded to one silicon atom, and it is more preferred that two oxime groups are bonded to one silicon atom.

The viscosity of the silicone oil (D1) at 25°C is, from the viewpoints of imparting a slipping property against aquatic organisms to enhance the antifouling performance and enhancing the applicability of the antifouling coating composition, preferably 10 mPa·s or more, more preferably 20 mPa·s or more, further preferably 40 mPa·s or more, furthermore preferably 60 mPa·s or more, furthermore preferably 80 mPa·s or more, and preferably 10,000 mPa·s or less, more preferably 5,000 mPa·s or less, further preferably 4,000 mPa·s or less.

In this description, the viscosity of the silicone oil (D1) at 25°C refers to a viscosity measured with a Brookfield rotational viscometer.

The kinematic viscosity of the silicone oil (D1) at 25°C is, from the viewpoints of imparting a slipping property against aquatic organisms to enhance the antifouling performance and enhancing the applicability of the antifouling coating composition, preferably 10 $mm^2/s$ or more, more preferably 30 $mm^2/s$ or more, further preferably 50 $mm^2/s$ or more, and preferably 5,000 $mm^2/s$ or less, more preferably 4,000 $mm^2/s$ or less, further preferably 3,500 $mm^2/s$ or less.

Examples of the modified silicone include a phenyl-modified silicone, a polyether-modified silicone, a long chain alkyl-modified silicone, a higher fatty acid ester-modified silicone, an alkyl fluoride-modified silicone, a carbinol-modified silicone, a carboxy-modified silicone, an amino-modified silicone, an epoxy-modified silicone, a methacryl-modified silicone, a mercapto-modified silicone, and a phenol-modified silicone.

Among the modified silicones, from the viewpoints of improving the antifouling performance, imparting a

moderate thixotropy to the antifouling coating composition, and improving the coatability thereof, the silicone oil (D1) is preferably one or more selected from a phenyl-modified silicone and a polyether-modified silicone.

Examples of the structure of the modified silicone include a side-chain-modified type, a both-end-modified type, a one-end-modified type, a block type, a side-chain- and one-end-modified type, and a side-chain- and both-end-modified type.

Examples of commercially available products of the dimethylsilicone include "KF-96-100cs" (manufactured by Shin-Etsu Chemical Co., Ltd., kinematic viscosity (25°C): 100 $mm^2/s$) and "KF-96-1,000cs" (manufactured by Shin-Etsu Chemical Co., Ltd., kinematic viscosity (25°C): 1,000 $mm^2/s$).

The phenyl modification rate of the phenyl-modified silicone is, from the viewpoints of the antifouling performance and of facilitating formation of an antifouling coating film, preferably 3% or more and 50% or less, more preferably 3% or more and 20% or less, and further preferably 4% or more and 10% or less. The phenyl modification rate is the percentage of the number of the phenyl groups based on the total number of the phenyl groups and the methyl groups that are bonded to silicon.

The kinematic viscosity of the phenyl-modified silicone at 25°C is, from the viewpoints of the antifouling performance of the antifouling coating film formed and the coating workability of the antifouling coating composition, preferably 10 $mm^2/s$ or more and 5,000 $mm^2/s$ or less, more preferably 50 $mm^2/s$ or more and 4,000 $mm^2/s$ or less, and further preferably 80 $mm^2/s$ or more and 3,500 $mm^2/s$ or less.

Examples of commercially available products of the phenyl-modified silicone include "KF-50-100cs" (manufactured by Shin-Etsu Chemical Co., Ltd., phenyl modification rate = 5%, kinematic viscosity (25°C): 100 $mm^2/s$), "KF-50-1,000cs" (manufactured by Shin-Etsu Chemical Co., Ltd., phenyl modification rate = 5%, kinematic viscosity (25°C): 1,000 $mm^2/s$), and "KF-50-3,000cs" (manufactured by Shin-Etsu Chemical Co., Ltd., phenyl modification rate = 5%, kinematic viscosity (25°C): 3,000 $mm^2/s$).

An example of commercially available products of the one-end methyl ethyl ketoxime- and side-chain phenyl-modified silicone is "BCA-011" (manufactured by Shin-Etsu Chemical Co., Ltd., phenyl modification rate = 5%, kinematic viscosity (25°C): 100 $mm^2/s$).

When the antifouling coating composition of the present invention contains a phenyl-modified silicone, the content thereof in the solid content of the antifouling coating composition is, from the viewpoints of the antifouling performance of the antifouling coating film formed and the easiness of formation of an antifouling coating film, preferably 0.1% by mass or more, more preferably 1% by mass or more, further preferably 3% by mass or more, furthermore preferably 5% by mass or more, and preferably 30% by mass or less, more preferably 25% by mass or less, further preferably 20% by mass or less.

Examples of the structure of the polyether-modified silicone include a side-chain-modified type, a both-end-modified type, a one-end-modified type, a block type, a side-chain- and one-end-modified type, and a side-chain- and both-end-modified type. A side-chain-modified type and a both-end-modified type are preferred, and a both-end-modified type is further preferred.

Examples of the polyether (polyalkylene glycol) that constitutes the polyether group (polyalkylene glycol group) of the polyether-modified silicone include polyethylene glycol, polypropylene glycol, and a copolymer of ethylene glycol and propylene glycol. A copolymer of polyethylene glycol and polypropylene glycol is preferred.

From the viewpoints of the antifouling performance of the antifouling coating film formed and of facilitating the formation of an antifouling coating film, the proportion of the polyether partial structure in the structure of the polyether-modified silicone is preferably 10% by mass or more and 60% by mass or less, more preferably 15% by mass or more and 50% by mass or less, and further preferably 20% by mass or more and 50% by mass or less.

When the antifouling coating composition of the present invention contains a polyether-modified silicone, the content thereof in the solid content of the antifouling coating composition is, from the viewpoints of enhancing the antifouling performance of the antifouling coating film formed, facilitating the formation of an antifouling coating film, and the like, preferably 0.1% by mass or more, more preferably 0.3% by mass or more, further preferably 0.5% by mass or more, and preferably 20% by mass or less, more preferably 10% by mass or less, further preferably 5% by mass or less.

In the polyether-modified silicone, when the polyether group includes an ethyleneoxy (EO) group and a propyleneoxy (PO) group, the molar ratio of the ethyleneoxy (EO) group to the propyleneoxy (PO) group [EO/PO] in the polyether group is, from the viewpoint of obtaining a composition superior in the long-term antifouling performance, preferably 0.5 or more, and preferably 9.0 or less, more preferably 5.0 or less, further preferably 4.0 or less, furthermore preferably 3.5 or less.

The molar ratio of the EO group to the PO group in the polyether-modified silicone can be measured, for example, by a $^{1}H$ NMR measurement.

(Calculation of Molar Ratio [EO/PO] in Polyether-Modified Silicone)

The molar ratio [EO/PO] in the polyether-modified silicone is calculated by the following formula based on the

integrated value of the methyl group of PO at about 0.8 to 1.2 ppm and that of the non-methyl group moiety of EO and PO at about 3 to 4 ppm in $^1H$ NMR.

EO/PO=[([integrated value at about 3 to 4 ppm]-[integrated value at about 0.8 to 1.2 ppm])/4]/[(integrated value at about 0.8 to 1.2 ppm]/3)

When the antifouling coating composition of the present invention contains a polyether-modified silicone containing an ethyleneoxy ($-OC_2H_4-$) structure unit, from the viewpoint of imparting a good antifouling performance to the antifouling coating film formed, the total mass of the ethyleneoxy ($-OC_2H_4-$) partial structure relative to 100 parts by mass of the dimethylsiloxane partial structure ($-(CH_3)_2Si-O-$) of the silicone is preferably 0.1 parts by mass or more and 10 parts by mass or less, and more preferably 0.3 parts by mass or more and 5 parts by mass or less.

The kinematic viscosity of the polyether-modified silicone at 25°C is, from the viewpoints of the antifouling performance, the coating workability of the antifouling coating composition, and the like, preferably 10 $mm^2/s$ or more and 5,000 $mm^2/s$ or less, more preferably 50 $mm^2/s$ or more and 2,000 $mm^2/s$ or less, and further preferably 100 $mm^2/s$ or more and 500 $mm^2/s$ or less.

Examples of commercially available products of the polyether-modified silicone include "X-22-4272" (manufactured by Shin-Etsu Chemical Co., Ltd., both-end type, kinematic viscosity (25°C): 270 $mm^2/s$), "KF-6020" (manufactured by Shin-Etsu Chemical Co., Ltd., side-chain type, kinematic viscosity (25°C): 180 $mm^2/s$), and "FZ-2203" (manufactured by Dow Corning Toray Co., Ltd., block type).

The content of the silicone oil (D1) in the solid content of the antifouling coating composition is, from the viewpoints of enhancing the antifouling performance of the antifouling coating film formed, facilitating the formation of an antifouling coating film, and the like, preferably 1% by mass or more, more preferably 3% by mass or more, further preferably 5% by mass or more, and preferably 50% by mass or less, more preferably 40% by mass or less, further preferably 30% by mass or less, furthermore preferably 20% by mass or less.

<Acrylic polymer having a hydrophilic group (D2)>

The acrylic polymer having a hydrophilic group (D2) used in the antifouling coating composition of the present invention preferably contains a structural unit derived from a monomer having a hydrophilic group, more preferably contains a structural unit derived from a monomer having a hydrophilic group and a structural unit derived from a hydrophobic monomer, and further preferably is constituted of a structural unit derived from a monomer having a hydrophilic group and a structural unit derived from a hydrophobic monomer.

The content of the structural unit derived from a monomer having a hydrophilic group in the acrylic polymer having a hydrophilic group (D2) is preferably 1% by mass or more and 100% by mass or less, more preferably 3% by mass or more and 80% by mass or less, further preferably 5% by mass or more and 70% by mass or less, and furthermore preferably 10% by mass or more and 60% by mass or less.

It is considered that, since the acrylic polymer has a hydrophilic group, the hydrophilic moiety of the acrylic polymer in the antifouling coating film dissolves or swells, and gradually migrates to the surface of the antifouling coating film, whereby the adhesion of aquatic organisms can be efficiently prevented. It is also considered that, owing to the acrylic structure, moderate hydrolysis occurs and the affinity to water varies, and as a result, the antifouling performance can be maintained over a long period of time.

The hydrophilic group of the monomer having a hydrophilic group is, from the viewpoint of the antifouling performance, preferably an ether group or a hydroxy group, and more preferably an ether group.

The content of the structural unit derived from a hydrophobic monomer in the acrylic polymer having a hydrophilic group (D2) is preferably 99% by mass or less, more preferably 97% by mass or less, further preferably 95% by mass or less, furthermore preferably 90% by mass or less, and preferably 20% by mass or more, more preferably 30% by mass or more, further preferably 40% by mass or more.

It is considered that, owing to the hydrophobic monomer, the acrylic polymer has a high affinity to a silicone crosslinking agent or the like which is another ingredient of the antifouling coating film and can uniformly provide a slipping effect to the surface of the antifouling coating film.

The monomer having a hydrophilic group is, from the viewpoint of the antifouling performance, preferably a monomer having a polyalkylene glycol group, a monomer having a hydroxy group, and a monomer having an alkoxyalkyl group, and more preferably a monomer having a polyalkylene glycol group.

Specifically, from the viewpoint of enhancing the antifouling performance, one or more selected from a polyalkylene glycol (meth)acrylate, a hydroxyalkyl (meth)acrylate, an alkoxyalkyl (meth)acrylate, tetrahydrofurfuryl (meth)acrylate, 4-(meth)acryloylmorpholine, and vinylpyrrolidone are preferred, one or more selected from a polyalkylene glycol (meth)acrylate and a hydroxyalkyl (meth)acrylate are more preferred, and a polyalkylene glycol (meth)acrylate is

further preferred.

Note that "(meth)acrylate" means "acrylate or methacrylate".

An example of the polyalkylene glycol (meth)acrylate is one in which one end of a polyalkylene glycol is bonded to (meth)acrylic acid directly by an ester bond or via a linking group and the remaining one end thereof is a hydroxy group or an alkoxy group, and is preferably an alkoxy group.

Among them, a polyalkylene glycol (meth)acrylate in which one end of a polyalkylene glycol is bonded to (meth) acrylic acid directly by an ester bond is preferred, and such a polyalkylene glycol (meth)acrylate in which the remaining one end is an alkoxy group is more preferred.

The (meth)acrylic acid at an end is preferably an acrylic acid or a methacrylic acid, and more preferably an acrylic acid.

Examples of the alkoxy group at an end include a methoxy group, a phenoxy group, and an octoxy group, and a methoxy group and a phenoxy group are preferred, and a methoxy group is more preferred.

The polyalkylene glycol constituting the polyalkylene glycol (meth)acrylate is preferably polyethylene glycol, polypropylene glycol, or a copolymer of ethylene glycol and propylene glycol, and more preferably polyethylene glycol.

The average number of alkylene glycol units constituting the polyalkylene glycol in the polyalkylene glycol (meth) acrylate is preferably 2 or more and 25 or less, more preferably 3 or more and 15 or less, and further preferably 5 or more and 12 or less.

Specific examples of the polyalkylene glycol (meth)acrylate include polyethylene glycol mono(meth)acrylate, polypropylene glycol mono(meth)acrylate, poly(ethylene glycol-propylene glycol) mono(meth)acrylate, poly(ethylene glycol-butylene glycol) mono(meth)acrylate, methoxy polyethylene glycol mono(meth)acrylate, allyloxy poly(ethylene glycol-propylene glycol) mono(meth)acrylate, phenoxy polyethylene glycol-polypropylene glycol methacrylate, octoxy poly(ethylene glycol-propylene glycol) mono(meth)acrylate, dodecyloxy polyethylene glycol mono(meth)acrylate, octadecyloxy polyethylene glycol mono(meth)acrylate, and nonylphenoxy polypropylene glycol acrylate. Methoxy polyethylene glycol mono(meth)acrylate is preferred.

Examples of commercially available products of the polyalkylene glycol (meth)acrylate include NK Ester AM-90G (methoxy polyethylene glycol #400 acrylate), NK Ester AM-130G (methoxy polyethylene glycol #550 acrylate), NK Ester M-90G (methoxy polyethylene glycol #400 methacrylate), and NK Ester M-230G (methoxy polyethylene glycol #1000 methacrylate), all of which are manufactured by Shin-Nakamura Chemical Co., Ltd.; Light Acrylate MTG-A (methoxy-triethylene glycol acrylate), Light Acrylate EC-A (ethoxy-diethylene glycol acrylate), Light Acrylate EHDG-AT (2-ethylhexyl-diethylene glycol acrylate), and Light Ester 041MA (methoxy polyethylene glycol methacrylate), all of which are manufactured by Kyoeisha Chemical Co., Ltd.; Blemmer ANP-300 (nonylphenoxy polypropylene glycol acrylate), Blemmer AP-400 (polypropylene glycol monoacrylate), Blemmer-70PEP-350B (polyethylene glycol polypropylene glycol monomethacrylate), Blemmer-55PET-800 (polyethylene glycol tetramethylene glycol monomethacrylate), and Blemmer 50POEP-800B (octoxypolyethylene glycol polypropylene glycol methacrylate), all of which are manufactured by NOF Corporation; and Viscoat #MTG (methoxypolyethylene glycol acrylate), manufactured by Osaka Organic Chemical Industry, Ltd.

Examples of the hydroxyalkyl (meth)acrylate include hydroxyethyl (meth)acrylate and hydroxypropyl (meth) acrylate.

Examples of commercially available products of the hydroxyalkyl (meth)acrylate include Light Ester HOA (N) (2-hydroxyethyl acrylate), Light Ester HO-250 (N) (2-hydroxyethyl methacrylate), and Light Ester HOP (N) (2-hydroxypropyl methacrylate), all of which are manufactured by Kyoeisha Chemical Co., Ltd.

An example of the alkoxyalkyl (meth)acrylate is methoxyethyl (meth)acrylate.

The tetrahydrofurfuryl (meth)acrylate is preferably tetrahydrofurfuryl acrylate or tetrahydrofurfuryl methacrylate, and more preferably tetrahydrofurfuryl acrylate.

The 4-(meth)acryloylmorpholine is preferably 4-acryloylmorpholine or 4-methacryloylmorpholine, and more preferably 4-acryloylmorpholine.

Examples of the vinylpyrrolidone include 1-vinyl-2-pyrrolidone (N-vinyl-2-pyrrolidone), 3-acetyl-1-vinylpyrrolidin-2-one, and 3-benzoyl-1-vinylpyrrolidin-2-one, and 1-vinyl-2-pyrrolidone is preferred.

Examples of the hydrophobic monomer include an alkyl (meth)acrylate having a branched, linear, or cyclic alkyl group having 1 or more and 30 or less carbon atoms, an aryl (meth)acrylate having an aromatic group having 6 or more and 10 or less carbon atoms, and a (meth)acrylic group-containing silicone. An alkyl (meth)acrylate and a (meth)acrylic group-containing silicone are preferred, and an alkyl (meth)acrylate is more preferred.

The number of carbon atoms of the alkyl group in the alkyl (meth)acrylate is preferably 1 or more and 30 or less, more preferably 4 or more and 18 or less, further preferably 4 or more and 8 or less, and furthermore preferably 4 or more and 6 or less.

The alkyl group is branched, linear, or cyclic, preferably branched or linear, and more preferably branched.

Specific examples of the alkyl (meth)acrylate include methyl (meth)acrylate, ethyl (meth)acrylate, propyl (meth) acrylate, isopropyl (meth)acrylate, n-butyl (meth)acrylate, isobutyl (meth)acrylate, tert-butyl (meth)acrylate, n-pentyl

(meth)acrylate, hexyl (meth)acrylate, cyclohexyl (meth)acrylate, n-octyl (meth)acrylate, isooctyl (meth)acrylate, 2-ethylhexyl (meth)acrylate, 3,5,5-trimethylhexyl (meth)acrylate, lauryl (meth)acrylate, cetyl (meth)acrylate, stearyl (meth) acrylate, isostearyl (meth)acrylate, phenyl (meth)acrylate, and benzyl (meth)acrylate. Among them, n-butyl (meth) acrylate, isobutyl (meth)acrylate, and 2-ethylhexyl (meth)acrylate are preferred.

The number of carbon atoms of the aromatic group in the aryl (meth)acrylate is preferably 6 or more and 10 or less, and more preferably 6 or more and 7 or less.

Specific examples of the aryl (meth)acrylate include phenyl (meth)acrylate and benzyl (meth)acrylate.

Examples of the (meth)acrylic group-containing silicone include a methacrylic group-containing silicone and an acrylic group-containing silicone, and a methacrylic group-containing silicone is preferred.

As the (meth)acrylic group-containing silicone, one in which a (meth)acrylic group is bonded to one end of a silicone main chain via a linking group and one in which a (meth)acrylic group is directly bonded to one end of a silicone main chain are preferred. One in which a (meth)acrylic group is bonded to one end of a silicone main chain via a linking group is preferred.

The linking group is preferably a trimethylene group.

The silicone main chain is preferably constituted of a linear or branched dimethylsilicone (polydimethylsiloxane), and more preferably constituted of a linear dimethylsilicone.

At the end opposite to the (meth)acrylic group, an alkyl group having 1 or more and 6 or less carbon atoms is more preferably present, and a butyl group is preferably present.

Examples of commercially available products of the (meth)acrylic group-containing silicone include Silaplane TM-0701T (tris(trimethylsiloxy)silylpropyl methacrylate), Silaplane FM-0711 (methacrylic group-containing dimethylpolysiloxane, number average molecular weight: 1,000), and Silaplane FM-0721 (methacrylic group-containing dimethylpolysiloxane, number average molecular weight: 5,000), all of which are manufactured by JNC Corporation.

By incorporating the (meth)acrylic group-containing silicone, the antifouling performance of the antifouling coating film formed can be enhanced.

When the antifouling coating composition contains an acrylic polymer having a hydrophilic group (D2) having an ethyleneoxy ($-OC_2H_4-$) partial structure, from the viewpoint of imparting a good antifouling performance to the antifouling coating film formed, the total mass of the ethyleneoxy ($-OC_2H_4-$) partial structure relative to 100 parts by mass of the dimethylsiloxane partial structure ($-(CH_3)_2Si-O-$) of the silicone is preferably 0.1 parts by mass or more and 10 parts by mass or less, and more preferably 0.3 parts by mass or more and 5 parts by mass or less.

The weight average molecular weight (Mw) of the acrylic polymer having a hydrophilic group (D2) is, from the viewpoints of the antifouling performance and the viscosity of the antifouling coating composition, preferably 1,000 or more, more preferably 3,000 or more, further preferably 5,000 or more, furthermore preferably 7,000 or more, and preferably 150,000 or less, more preferably 100,000 or less, further preferably 50,000 or less, furthermore preferably 30,000 or less.

A weight average molecular weight (Mw) of the acrylic polymer having a hydrophilic group (D2) within the above range is preferred in that a good antifouling performance can be imparted to the antifouling coating film.

When the antifouling coating composition of the present invention contains the acrylic polymer having a hydrophilic group (D2), the content of the acrylic polymer having a hydrophilic group (D2) in the solid content of the antifouling coating composition is, from the viewpoint of achieving both the antifouling performance and the production workability, preferably 0.2% by mass or more, more preferably 0.8% by mass or more, further preferably 2% by mass or more, furthermore preferably 4% by mass or more, and preferably 30% by mass or less, more preferably 20% by mass or less, further preferably 10% by mass or less.

<Paraffin oil (D3)>

The paraffin oil (D3) is not particularly limited, and any paraffin oil having such a suitable kinematic viscosity as described later which is appropriately selected from known paraffin oils can be used.

The paraffin oil is preferably liquid paraffin.

The kinematic viscosity of the paraffin oil (D3) at 25°C is, from the viewpoints of the antifouling performance, the coating workability of the antifouling coating composition, and the like, preferably 10 $mm^2/s$ or more, more preferably 50 $mm^2/s$ or more, further preferably 100 $mm^2/s$ or more, and preferably 5,000 $mm^2/s$ or less, more preferably 2,000 $mm^2/s$ or less, further preferably 500 $mm^2/s$ or less.

The content of the paraffin oil (D3) in the solid content of the antifouling coating composition of the present invention is, from the viewpoints of enhancing the antifouling performance of the antifouling coating film formed, facilitating the formation of an antifouling coating film, and the like, preferably 0.1% by mass or more, more preferably 0.3% by mass or more, and preferably 20% by mass or less, more preferably 10% by mass or less.

The total content of the slipping agent (D) in the solid content of the antifouling coating composition of the present invention is, from the viewpoints of enhancing the antifouling performance of the antifouling coating film formed, promoting

the formation of an antifouling coating film, and the like, preferably 1% by mass or more, more preferably 3% by mass or more, further preferably 5% by mass or more, furthermore preferably 10% by mass or more, and preferably 40% by mass or less, more preferably 30% by mass or less, further preferably 25% by mass or less, furthermore preferably 20% by mass or less.

[Coloring Pigment (E)]

It is also preferred that the antifouling coating composition of the present invention contains a coloring pigment (E).

By incorporating the coloring pigment (E) into the antifouling coating composition of the present invention, the coating film strength can be increased.

The coloring pigment (E) is not particularly limited, and examples thereof include inorganic pigments, such as iron oxide, titanium oxide, carbon black, zinc oxide, aluminum silicate, alumina white, and barium sulfate; and organic pigments, such as naphthol red and phthalocyanine blue. From the viewpoints of the production workability, coating workability, and storage stability of the antifouling coating composition, and the antifouling performance of the antifouling coating film formed, the coloring pigment (E) preferably contains at least an inorganic pigment, and above all, is preferably one or more selected from iron oxide, titanium oxide, carbon black, zinc oxide, aluminum silicate, alumina white, and barium sulfate, preferably one or more selected from iron oxide, titanium oxide, and carbon black, and more preferably one or more selected from iron oxide and titanium oxide.

Examples of the iron oxide include red iron oxide, yellow iron oxide, and black iron oxide.

As the titanium oxide, any of the rutile type, anatase type, and brookite type can be used, and from the viewpoints of the stability of the antifouling coating film and the antifouling coating composition and the availability, the rutile type is preferably used.

As the coloring pigment (E), one kind may be used alone or two or more kinds may be used in combination.

The present inventors have found that, when the antifouling coating composition contains, in addition to the pyrithione metal salt (B), an organic pigment as the coloring pigment (E), aggregation is likely to occur through storage. They have found that the generation of aggregates through storage and a reduction in the anti-sagging property involved in the generation of an aggregate are effectively prevented by adding the oxidized polyethylene wax (C).

Accordingly, the antifouling coating composition of this embodiment is particularly effective when an organic pigment is contained as the coloring pigment (E).

Examples of the organic pigment include phthalocyanine blue, phthalocyanine green, naphthol red, and diketopyrrolopyrrole red, and one or more selected from phthalocyanine blue and naphthol red are preferred.

When the antifouling coating composition of the present invention contains the coloring pigment (E), the content of the coloring pigment (E) in the solid content of the antifouling coating composition is, from the viewpoints of being superior in the antifouling performance of the antifouling coating film formed and in the production workability, coating workability, and storage stability of the antifouling coating composition, and the like, preferably 0.01% by mass or more and 20% by mass or less, more preferably 1% by mass or more and 15% by mass or less, and further preferably 3% by mass or more and 12% by mass or less.

When the antifouling coating composition of the present invention contains an organic pigment as the coloring pigment (E), the content of the organic pigment in the solid content of the antifouling coating composition is, from the viewpoints of being superior in the production workability, coating workability, and storage stability of the antifouling coating composition, and the like, preferably 0.01% by mass or more and 10% by mass or less, more preferably 0.1% by mass or more and 9% by mass or less, and further preferably 0.2% by mass or more and 8% by mass or less.

[Organic Solvent (F)]

The antifouling coating composition of the present invention may contain an organic solvent (F) for keeping a low viscosity of the coating composition to enhance the coating workability.

Examples of the organic solvent (F) include an aromatic hydrocarbon-based organic solvent, an aliphatic hydrocarbon-based organic solvent, an alicyclic hydrocarbon-based organic solvent, a ketone-based organic solvent, an alcohol-based organic solvent, and an ester-based organic solvent. An aromatic hydrocarbon-based organic solvent and a ketone-based organic solvent are preferred, and an aromatic hydrocarbon-based organic solvent is more preferred.

Examples of the aromatic hydrocarbon-based organic solvent include toluene, xylene, and mesitylene, and xylene is preferred.

Examples of the aliphatic hydrocarbon-based organic solvent include pentane, hexane, heptane, and octane.

Examples of the alicyclic hydrocarbon-based organic solvent include cyclohexane, methylcyclohexane, and ethylcyclohexane.

Examples of the ketone-based organic solvent include acetylacetone, acetone, methyl ethyl ketone, methyl

isobutyl ketone, and dimethyl carbonate, and acetylacetone is preferred.

Examples of the alcohol-based organic solvent include ethanol, n-propanol, isopropyl alcohol, n-butanol, and isobutanol.

Examples of the ester-based organic solvent include ethyl acetate, propyl acetate, butyl acetate, and propylene glycol monomethyl ether acetate.

As the organic solvent (F), one kind may be used alone or two or more kinds may be used in combination.

When the antifouling coating composition of the present invention contains the organic solvent (F), the content of the organic solvent (F) in the coating composition is, from the viewpoint of enhancing the coating workability, preferably 3% by mass or more, more preferably 10% by mass or more, further preferably 15% by mass or more, and from the viewpoints of preventing sagging during coating and reducing the environmental load, preferably 45% by mass or less, more preferably 40% by mass or less, further preferably 35% by mass or less.

[Silica Particles (G)]

From the viewpoints of the hardness, flexibility, and strength of the antifouling coating film formed, the antifouling coating composition of the present invention preferably contains silica particles (G), and examples of the silica particles (G) include hydrophobic silica particles (G1) and hydrophilic silica particles (G2).

The silica particles (G) not only enhance the properties of the antifouling coating film formed but also improve the fluidity and thixotropy of the antifouling coating composition.

The antifouling coating composition preferably contains at least one selected from the group consisting of the hydrophobic silica particles (G1) and the hydrophilic silica particles (G2), preferably contains at least the hydrophobic silica particles (G1), and more preferably contains both the hydrophobic silica particles (G1) and the hydrophilic silica particles (G2).

The hydrophobic silica particles (G1) are preferably added from the viewpoints of the hardness, flexibility, and strength of the antifouling coating film formed, and enhancement of the fluidity and thixotropy of the antifouling coating composition. The hydrophilic silica particles (G2) act to enhance the antifouling performance of the antifouling coating film formed although the viscosity tends to decrease by the addition thereof.

As the silica particles (G), a dry silica and a wet silica are preferred, and a dry silica is more preferred.

The hydrophobic silica particles (G1) are a hydrophobically-treated silica (a silica with a hydrophobically treated surface), and is obtained by treating a hydroxy group bonded to a silicon atom (silanol group) on the silica surface with a hydrophobizing agent, and examples thereof include an aqueous wet silica and a hydrophobic fumed silica.

Examples of the hydrophobizing agent include an organodisilazane, an organoalkoxysilane, an organochlorosilane, a cyclic organopolysilazane, and a linear organopolysiloxane, and among them, an organodisilazane, an organoalkoxysilane, and an organochlorosilane are preferred. More specific examples thereof include silazane compounds, such as hexamethyldisilazane, hexaethyldisilazane, hexapropyldisilazane, 1,3-diethyl-1,1,3,3-tetramethyldisilazane, 1,3-dimethyl-1,1,3,3-tetraethyldisilazane, 1,3-divinyltetramethyldisilazane, 1,3-diallyltetramethyldisilazane, 1,3-dibutenyltetramethyldisilazane, 1,3-dipentenyltetramethyldisilazane, 1,3-dihexenyltetramethyldisilazane, 1,3-diheptenyltetramethyldisilazane, 1,3-dioctenyltetramethyldisilazane, 1,3-dinonenyltetramethyldisilazane, 1,3-didecenyltetramethyldisilazane, 1,3-divinyltetraethyldisilazane, and 1,3-dimethyltetravinyldisilazane, alkoxysilane compounds, such as methyltrimethoxysilane, ethyltrimethoxysilane, propyltrimethoxysilane, vinyltrimethoxysilane, allyltrimethoxysilane, and butenyltrimethoxysilane, chlorosilane compounds, such as trimethylchlorosilane, triethylchlorosilane, tripropylchlorosilane, dimethyldichlorosilane, diethyldichlorosilane, dipropyldichlorosilane, dimethylvinylchlorosilane, and allyldimethylchlorosilane. In point of the workability, the reactivity with a silanol group on the silica surface, and the like, a silazane compound or a chlorosilane compound is preferably used, methyltrichlorosilane, dimethyldichlorosilane, hexamethyldisilazane, hexamethylcyclotrisiloxane, and octamethylcyclotetrasiloxane, and 1,3-divinyltetramethyldisilazane are more preferably used, and hexamethyldisilazane, 1,3-divinyltetramethyldisilazane, and dimethyldichlorosilane are further preferably used.

Examples of commercially available products of the hydrophobic silica include "AEROSIL R974" and "AEROSIL RX200" manufactured by NIPPON AEROSIL CO., LTD.

The hydrophilic silica particles (G2) is an untreated silica (surface-untreated silica), and examples thereof include a dry silica (fumed silica, anhydrous silica) and a wet silica (hydrous silica), and a dry silica is preferred, and fumed silica is more preferred.

An example of commercially available products of the hydrophilic silica is "AEROSIL 200" manufactured by NIPPON AEROSIL CO., LTD.

When the antifouling coating composition of the present invention contains the silica particles (G), the content of the silica particles (G) in the solid content of the antifouling coating composition is, from the viewpoint of enhancing the strength and hardness of the antifouling coating film formed, preferably 0.1% by mass or more, more preferably 1% by mass or more, further preferably 3% by mass or more, and preferably 20% by mass or less, more preferably 15% by mass

or less, further preferably 10% by mass or less.

The content of the silica particles (G) relative to 100 parts by mass of the curable polyorganosiloxane (A) is, from the viewpoint of enhancing the strength and hardness of the antifouling coating film formed, preferably 0.5 parts by mass or more, more preferably 1 part by mass or more, further preferably 3 parts by mass or more, and preferably 30 parts by mass or less, more preferably 20 parts by mass or less, further preferably 15 parts by mass or less.

When the hydrophobic silica particles (G1) and the hydrophilic silica particles (G2) are used in combination as the silica particles (G), the ratio of the content of the hydrophobic silica particles (G1) to the content of the hydrophilic silica (G2) (G1/G2) in the antifouling coating composition is preferably 5/95 or more and 90/10 or less, more preferably 10/80 or more and 80/20 or less, further preferably 15/85 or more and 70/30 or less, furthermore preferably 20/80 or more and 60/40 or less, and furthermore preferably 20/80 or more and 40/60 or less.

[Curing Catalyst (H)]

The antifouling coating composition of this embodiment preferably contains a curing catalyst (H) for enhancing the curing rate and the film strength of the antifouling coating film.

The curing catalyst (H) is preferably a tin compound, a titanium compound, a fatty acid metal salt, and an amine compound, and more preferably a tin compound, a fatty acid alkali metal salt, and an amine compound. Furthermore, from the viewpoint of enhancing the curing rate under a low-temperature high-humidity environment, combination use of a fatty acid metal salt and an amine compound is preferred, and combination use of a fatty acid alkali metal salt and an amine compound is more preferred.

Examples of the tin compound include dibutyltin diacetate, dibutyltin acetoacetonate, dibutyltin dilaurate, dibutyltin dioleate, dibutyltin oxide, dibutyltin dimethoxide, dibutyltin dipentanoate, dibutyltin dioctoate, dibutyltin dineodecanoate, dioctyltin dineodecanoate, bis(dibutyltin laurate) oxide, dibutyl bis(triethoxysiloxy) tin, bis(dibutyltin acetate) oxide, dibutyltin bis(ethylmaleate), dioctyltin bis(ethylmaleate), tin naphthenate, and tin oleate, dibutyltin diacetate, dibutyltin acetoacetonate, dibutyltin dilaurate, dibutyltin dioleate, dibutyltin oxide, dibutyltin dimethoxide, dibutyltin dipentanoate, dibutyltin dioctoate, and dibutyltin dineodecanoate are preferred, and dibutyltin dilaurate is more preferred.

Examples of commercially available products of the tin compound include "NEOSTANN U-100" manufactured by NITTO KASEI CO., LTD. and "Gleck TL" manufactured by DIC Corporation.

Examples of the titanium compound include titanium tetraisopropoxide, titanium tetra-n-butoxide, titanium tetrakis(2-ethylhexoxide), titanium dipropoxide bis(acetylacetonate), and titanium isopropoxy octyl glycol.

Examples of organic metal compounds other than the tin compound and titanium compound include zinc naphthenate, zinc stearate, zinc 2-ethyloctoate, iron 2-ethylhexoate, cobalt 2-ethylhexoate, manganese 2-ethylhexoate, cobalt naphthenate, and an alkoxy aluminum compound.

Examples of the fatty acid that constitutes the fatty acid metal salt include acetic acid, 2-ethylhexanoic acid, octanoic acid, decanoic acid, neodecanoic acid, naphthenic acid, versatic acid, and oxalic acid.

Examples of the metal that forms the metal salt include alkali metals, such as lithium, sodium, and potassium, magnesium, calcium, neodymium, titanium, zirconium, iron, ruthenium, cobalt, nickel, copper, zinc, bismuth, and aluminum. Among them, an alkali metal and Group 10 to 12 metals, such as nickel, copper, and zinc, are preferred, and an alkali metal and zinc are more preferred.

Examples of the amine compound include 1,6-hexanediamine-N,N,N,N-tetramethyl, 2,4,6-tris(dimethylaminomethyl)phenol, and 1,2-dimethylimidazole. Among them, 2,4,6-tris(dimethylaminomethyl)phenol is preferred.

As the curing catalyst (H), one kind may be used alone or two or more kinds may be used in combination.

When the antifouling coating composition of the present invention contains the curing catalyst (H), the content of the curing catalyst (H) in the solid content of the antifouling coating composition is, from the viewpoint of enhancing the curing rate, preferably 0.01% by mass or more, more preferably 0.1% by mass or more, further preferably 0.3% by mass or more, and preferably 10% by mass or less, more preferably 5% by mass or less, further preferably 3% by mass or less.

When the antifouling coating composition of the present invention contains the curing catalyst (H), the content of the curing catalyst (H) in the antifouling coating composition relative to 100 parts by mass of the curable polyorganosiloxane (A) is preferably 0.03 parts by mass or more and 30 parts by mass or less, more preferably 0.3 parts by mass or more and 10 parts by mass or less, and further preferably 0.5 parts by mass or more and 5 parts by mass or less.

[Organic Silicon Crosslinking Agent (I)]

The antifouling coating composition of the present invention preferably contains an organosilicon crosslinking agent (I) for enhancing the curing rate and the strength and adhesion to a substrate of the antifouling coating film. The organosilicon crosslinking agent is not limited to those aiming at those functions, and, for example, may be incorporated for the purpose of acting as a wetting agent of the coloring pigment (E).

The organosilicon crosslinking agent (I) has three or four hydrolyzable groups on a silicon atom, and when having

three hydrolyzable groups, the organosilicon crosslinking agent (I) is an organic silane which further has one hydrocarbon group, with a partially condensate thereof included therein.

There are three or four hydrolyzable groups with respect to one silicon atom.

The hydrolyzable group is preferably an alkoxy group.

The alkoxy group is preferably a methoxy group or an ethoxy group.

The hydrocarbon group is preferably a hydrocarbon group having 1 or more and 6 or less carbon atoms, more preferably a methyl group, an ethyl group, or a propyl group, and further preferably a methyl group or an ethyl group.

Examples of the organosilicon crosslinking agent (I) include tetraethyl orthosilicate, a partially hydrolyzed condensate of tetraethyl orthosilicate, an alkyltrialkoxysilane, and an oxime silane, and tetraethyl orthosilicate and a partially hydrolyzed condensate of tetraethyl orthosilicate are preferred.

Examples of commercially available products of the tetraethyl orthosilicate include "Ethyl silicate 28" manufactured by Colcoat Co., Ltd. and "Ethyl Orthosilicate" manufactured by Tama Chemicals Co., Ltd.

Examples of commercially available products of the partially hydrolyzed condensate of tetraethyl orthosilicate include "Silicate 40" manufactured by Tama Chemicals Co., Ltd. and "WACKER SILICATE TES 40 WN" manufactured by Wacker Asahikasei Silicone Co., Ltd.

An example of commercially available products of the alkyltrialkoxysilane is "KBM-13" manufactured by Shin-Etsu Chemical Co., Ltd.

Examples of commercially available products of the oxime silane include "MTO(MOS)" (methyl tris(methyl ethyl ketoxime)silane) and "VTO(VOS)" (vinyl tris(methyl ethyl ketoxime)silane) manufactured by Toray Industries, Inc.

As the organosilicon crosslinking agent (I), one kind may be used alone or two or more kind may be used in combination.

When the antifouling coating composition of the present invention contains the organosilicon crosslinking agent (I), the content of the organosilicon crosslinking agent (I) in the solid content of the antifouling coating composition is preferably 0.01% by mass or more, more preferably 0.1% by mass or more, further preferably 0.3% by mass or more, and preferably 15% by mass or less, more preferably 12% by mass or less, further preferably 9% by mass or less.

When the antifouling coating composition of the present invention contains the organosilicon crosslinking agent (I), the content of the organosilicon crosslinking agent (I) in the antifouling coating composition relative to 100 parts by mass of the curable polyorganosiloxane (A) is 0.03 parts by mass or more, more preferably 0.1 parts by mass or more, further preferably 0.5 parts by mass or more, and preferably 20 parts by mass or less, more preferably 15 parts by mass or less, further preferably 10 parts by mass or less.

[Silane Coupling Agent (J)]

The antifouling coating composition of this embodiment may contain a silane coupling agent (J) for the purpose of enhancing the curing rate and the curability and adhesion to a substrate of the antifouling coating film.

The silane coupling agent (J) is an organic alkoxysilane having at least one alkoxy group and at least one organic reactive group on a silicon atom.

The alkoxy group is preferably a methoxy group or an ethoxy group, and more preferably a methoxy group.

One to three alkoxy groups, preferably two to three alkoxy groups, and more preferably three alkoxy groups are bonded to a silicon atom.

Examples of the organic reactive group include an amino group, a mercapto group, an epoxy group, an isocyanate group, an ureido group, a vinyl group, an acryl group, a methacryl group, and a styryl group. An amino group, a mercapto group, an epoxy group, an isocyanate group, and an ureido group are preferred, an amino group, a mercapto group, and an epoxy group are more preferred, and an amino group is further preferred.

As a specific example of the organic reactive group containing an amino group, a 2-(aminoethyl)-3-aminopropyl group and a 3-aminopropyl group are preferred.

Examples of the silane coupling agent (J) include 3-(2-aminoethylamino)propyltrimethoxysilane, 3-aminopropyltrimethoxysilane, 3-aminopropyltriethoxysilane, 3-(2-(2-aminoethylamino)ethylamino)propyltrimethoxysilane, 3-glycidoxypropyltrimethoxysilane, 3-isocianatopropyltrimethoxysilane, 3-mercaptopropyltrimethoxysilane, and N-phenyl-3-aminopropyltrimethoxysilane, 3-(2-aminoethylamino)propyltrimethoxysilane, 3-aminopropyltrimethoxysilane, or 3-aminopropyltriethoxysilane is preferred, and 3-(2-aminoethylamino)propyltrimethoxysilane is more preferred.

As the silane coupling agent (J), a condensate of the aforementioned compounds maybe used. As the silane coupling agent (J), one kind may be used alone or two or more kind may be used in combination.

When the antifouling coating composition of the present invention contains the silane coupling agent (J), the content of the silane coupling agent (J) in the solid content of the antifouling coating composition is preferably 0.05% by mass or more, more preferably 0.1% by mass or more, and preferably 3% by mass or less, more preferably 1% by mass or less.

The content of the silane coupling agent (J) in the antifouling coating composition relative to 100 parts by mass of

the curable polyorganosiloxane (A) is preferably 0.03 parts by mass or more, more preferably 0.1 parts by mass or more, and preferably 3 parts by mass or less, more preferably 1 part by mass or less.

The antifouling coating composition of the present invention preferably contains the organosilicon crosslinking agent (I) and/or the silane coupling agent (J) for the purpose of enhancing the curability, strength, and adhesion to a substrate of the antifouling coating film.

[Organism Repellent (K) Other Than Pyrithione Metal Salt (B)]

The antifouling coating composition of the present invention preferably contains an organism repellent (K) other than the pyrithione metal salt (B) (hereinafter sometimes simply referred to as organism repellent (K)) for the purpose of enhancing the antifouling performance of the antifouling coating film formed.

The organism repellent (K) is eluted from an antifouling coating film in water, and has an effect of preventing the adhesion of aquatic organisms to an antifouling coating film surface to enhance the antifouling performance.

As the organism repellent (K), one having a repellent effect on aquatic organisms and having a certain eluting rate into water is preferred, and one or more selected from 4-bromo-2-(4-chlorophenyl)-5-(trifluoromethyl)-1H-pyrrole-3-carbonytrile (synonym: Tralopyril) and 4,5-dichloro-2-n-octyl-4-isothiazolin-3-one (synonym: DCOIT) are preferred. As the organism repellent (K), one kind may be used alone or two or more kind may be used in combination.

When the antifouling coating composition of the present invention contains the organism repellent (K), the content of the organism repellent (K) in the solid content of the antifouling coating composition is, from the viewpoints of the strength and antifouling performance of the antifouling coating film and the coatability of the antifouling coating composition, preferably 0.1% by mass or more, more preferably 1% by mass or more, further preferably 5% by mass or more, and preferably 20% by mass or less, more preferably 15% by mass or less, further preferably 10% by mass or less.

[Other Optional Ingredients]

Examples of the pigment other than the coloring pigment (E) and the silica particles (G) include talc, mica, calcium carbonate, barium carbonate, potassium feldspar, kaolin, and glass short fibers. As the inorganic filler, one kind may be used alone or two or more kind may be used in combination.

Examples of the dehydrating agent other than the organosilicon crosslinking agent (I) include zeolite, porous alumina, an orthoester such as an orthoformic acid alkyl ester, orthoboric acid, and an isocyanate compound.

Examples of the anti-sagging agent and anti-settling agent other than the oxidized polyethylene wax (C) include an organic clay-based wax (such as a stearate salt, a lecithin salt, or an alkylsulfonate salt of Al, Ca, or Zn), an organic wax (such as polyethylene wax, amide wax, polyamide wax, hydrogenated castor oil wax), and a mixture of an organic clay-based wax and an organic wax.

As the wet dispersant other than the oxidized polyethylene wax (C), a known organic or inorganic wet dispersant can be used, and an example thereof is a wet dispersant having a silicone main chain. Examples of commercially available products thereof include "KP-578" and "KF-6106" manufactured by Shin-Etsu Chemical Co., Ltd.

Examples of the enzyme include serine protease, cysteine protease, metalloproteinase, cellulase, hemicellulase, pectinase, and glycosidase.

Examples of the flame retardant include antimony oxide and oxidized paraffin.

Examples of the thermal conductivity improver include boron nitride and aluminum oxide.

[Aspect of Antifouling Coating Composition]

The antifouling coating composition of the present invention may be a one-component type antifouling coating composition in which the ingredients are contained in one composition or may be a multi-component type antifouling coating composition in which the ingredients are contained in two or more composition, which are mixed before coating. In point of preventing deterioration during storage, a multi-component type antifouling coating composition is preferred, and from the viewpoint of the coating workability, a one-component type antifouling coating composition is preferred.

Examples of the multi-component type antifouling coating composition include two-component type antifouling coating composition and a multi-component type antifouling coating composition including three or more components, and from the viewpoint of the coating workability, a two-component type antifouling coating composition is preferred, and from the viewpoint of preventing the deterioration during storage, a multi-component type antifouling coating composition including three or more components is preferred.

When the antifouling coating composition of the present invention is a multi-component type antifouling coating composition, the curable polyorganosiloxane (A) is preferably contained in a different component from the curing catalyst (H), the organosilicon crosslinking agent (I), and the silane coupling agent (J).

The pyrithione metal salt (B), the oxidized polyethylene wax (C), the silica particles (G), the coloring pigment (E),

and the organism repellent (K) other than the pyrithione metal salt (B) are preferably contained in the same component as the curable polyorganosiloxane (A).

The content of each ingredient in the antifouling coating composition of this embodiment is the content based on the total amount of all the components even in the case of a multi-component type antifouling coating composition.

[Production Method of Antifouling Coating Composition]

The antifouling coating composition is preferably produced in the following manner. It is preferred to include firstly a step of kneading the curable polyorganosiloxane (A) and the silica particles (G), which may be heated during kneading or after kneading. By kneading the ingredients in advance, the affinity of the two ingredients is enhanced so that aggregation of the silica and an increase in the viscosity of the coating composition can be prevented.

The condition in heating is preferably 100°C or higher, more preferably 100°C or higher and 300°C or lower, and further preferably 140°C or higher and 200°C or lower. The pressure is preferably an ordinary pressure or a reduced pressure, and the treatment time is preferably 3 hours or more and 30 hours or less.

The method for producing the antifouling coating composition of this embodiment preferably includes a Step a and a Step b in this order.

Step a: a step of preparing a mixture A that contains the pyrithione metal salt (B) and the oxidized polyethylene wax (C)
Step b: a step of mixing the mixture A obtained in the Step a and the curable polyorganosiloxane (A) to obtain an antifouling coating composition
When a compound having a silicone chain, such as the curable polyorganosiloxane (A), is blended into the mixture A, the water repellency is increased and cissing occurs, and thus, it is preferred to blend the compound having a silicone chain, such as the curable polyorganosiloxane (A), after preparing the mixture A of the ingredients excluding the compound.

In the Step a, the mill base A preferably contains a part of the organic solvent (F), and more preferably contains, in addition to the pyrithione metal salt (A) and the polyethylene wax (B), a part of the organic solvent (F) and the other ingredients (for example, the coloring pigment (E)).

On the other hand, in the Step b, it is preferred to mix, in addition to the mixture A and the curable polyorganosiloxane (A), the remaining organic solvent (F) to obtain an antifouling coating composition.

Even when the antifouling coating composition of the present invention is a one-component type antifouling coating composition, it is preferred to knead the curable polyorganosiloxane (A) and the silica particles (G) in advance as described above.

When compounds having a silicone chain, such as the curable polyorganosiloxane (A) and the silicone oil (D1), are added, the water repellency of the antifouling coating composition tends to increase. Therefore, in the case of a one-component type antifouling coating composition, it is preferred that, in the Step a, the pyrithione metal salt (B), the oxidized polyethylene wax (C), a part of the organic solvent (F), and the other ingredient, excluding compounds having a silicone chain, such as the curable polyorganosiloxane (A) having a silicone chain and the silicone oil (D1), are mixed and stirred to prepare the mixture A, and then, in the Step b, the compounds having a silicone chain, such as the curable polyorganosiloxane (A) and the silicone oil (D1), and the remaining organic solvent (F) are blended therein, mixed, and stirred, thereby preparing an antifouling coating composition. When a step of kneading the silica particles (G) and the curable polyorganosiloxane (A) is included, the silica particles (G) are preferably added to the mixture A, together with the curable polyorganosiloxane (A), in the step 2.

Even when the antifouling coating composition of the present invention is a multi-component type antifouling coating composition, it is preferred to knead the curable polyorganosiloxane (A) and the silica particles (G) in advance as described above.

A compound having a silicone chain other than the curable polyorganosiloxane (A) is preferably incorporated into a component other than the base component. Accordingly, the base component preferably contains only the curable polyorganosiloxane (A) as a compound having a silicone chain. When the base component contains a compound having a silicone chain other than the curable polyorganosiloxane (A), such as the silicone oil (D1), such a compound is preferably added in the Step b.

In preparing the base component of a multi-component type antifouling coating composition, it is preferred that, in the Step a, the pyrithione metal salt (B), the oxidized polyethylene wax (B), a part of the organic solvent (F), and the other ingredients, excluding the curable polyorganosiloxane (A) having a silicone chain, are mixed and stirred to prepare the mixture A, and then, in the Step b, a compound having a silicone chain, such as the curable polyorganosiloxane (A), and the remaining organic solvent (F) are blended therein, mixed, and stirred, thereby preparing an antifouling coating composition. When a step of kneading the silica particles (G) and the curable polyorganosiloxane (A) is included, the silica particles (G) are preferably added to the mixture A, together with the curable polyorganosiloxane (A), in the Step b.

The mixing and stirring are preferably performed at 0°C or higher and 50°C or lower.

[Antifouling Coating Film]

The antifouling coating film of the present invention is an antifouling coating film formed from the antifouling coating composition described above. The antifouling coating film can be formed by coating or impregnating a substrate with the antifouling coating composition of this embodiment, and then, drying and curing the antifouling coating composition.

The antifouling coating film is preferably an antifouling coating film used with the aim of preventing a substrate from fouling due to aquatic organisms.

[Substrate with Antifouling Coating Film and Production Method Thereof]

The substrate with an antifouling coating film of the present invention includes a substrate and an antifouling coating film provided on a surface of the substrate.

A method for producing the substrate with an antifouling coating film preferably includes a step of coating a substrate with the antifouling coating composition of this embodiment (coating step) or a step of impregnating a substrate with the antifouling coating composition of this embodiment, and preferably further includes a step of drying and curing the antifouling coating composition.

<Coating step>

Examples of a method for applying the antifouling coating composition of the present invention include known methods, such as brush coating, roller coating, spray coating, roll coater coating, flow coater coating, slit coater coating, gravure coater coating, spin coater coating, curtain roll coater coating, electrostatic coating, immersion coating, silk printing, and spin coating.

The thickness of the coating film formed from the antifouling coating composition of the present invention is set so that the antifouling coating film formed finally has the thickness as described later. The coating film may be formed by one coating operation, or may be formed by two or more coating operations (two or more coatings).

The thickness of the antifouling coating film of the present invention is not particularly limited, but preferably 5 μm or more, more preferably 10 μm or more, further preferably 50 μm or more, and preferably 1,000 μm or less, more preferably 500 μm or less, further preferably 300 μm or less. When the antifouling coating film is in such an aspect, an antifouling coating film superior in long-term antifouling performance is obtained.

<Drying and curing step>

The antifouling coating composition of the present invention applied by the above method is allowed to stand, for example, under a condition of 23°C for preferably approximately 0.5 days or more and 14 days or less, more preferably 1 day or more and 10 days or less to dry and cure the antifouling coating composition, whereby an antifouling coating film can be obtained.

The drying and curing of the antifouling coating composition of the present invention may be conducted under heat and/or air blow.

Here, the substrate is not particularly limited, and is preferably a substrate brought into contact with sea water or fresh water, more preferably at least one selected from a ship, an underwater structure, a fishing material, a water supply or drainage pipe, and an instrument used on or in water, more preferably a ship or an underwater structure, and particularly preferably a ship. Specific examples include ships (examples: an outside shell of a ship's hull, in particular, a part from a draft unit to the ship's bottom, of a large scale steel ship, such as a container ship or a tanker, a fishing boat, an FRP boat, a wooden vessel, and a yacht, including both a newly built ship and a repaired ship), underwater structures (examples: a petroleum pipeline, a water conduit, a water circulation pipe, a water supply or drainage port for a factory and a thermal power or nuclear power plant, a marine cable, seawater utilization equipment (such as a seawater pump), a mega-float, a coastal road, an undersea tunnel, seaport equipment, and structures for various underwater civil engineering works in a canal, a water channel, and the like), fishing materials (examples: a rope, a fishing net, a fishing gear, a float, and a buoy), a water supply or drainage pipe for sea water and the like in a factory, a thermal power or nuclear power plant, or the like, instruments used in or on water (such as a solar power generation panel, an observation window of a meter and an instrument, a camera lens, an underwater light, and an underwater sensor), and a monitoring window of a submarine.

The material of the substrate is not particularly limited. Particularly in ships, examples thereof include a steel, aluminum, wood, FRP, glass, and a plastic, and in an instrument used on or in water, examples thereof include glass and a plastic.

The substrate may be previously treated with another treating agent, such as an antirust agent, or a coating film, such as a primer, may be previously formed on the surface thereof. The substrate may be previously coated with the present composition, or may be coated with an old antifouling coating film that is the present coating film or another antifouling coating film that was formed before and has been deteriorated over time, with no particular limitation.

## Examples

The present invention will be more specifically described below based on Examples, but the present invention is not to be limited to the Examples.

(1) Kneaded Product of Curable Silicone (A) and Silica Particles (G)

The curable silicone (A) and the silica particles (G) shown in Table 1 were kneaded in the ratio shown in Table 1, thereby obtaining a kneaded product. The viscosities in Table 1 are each a value at 25°C, and were measured with a Brookfield rotational viscometer according to JIS K 6249:2003. The weight average molecular weights were each measured in the same manner as an average molecular weight of a polymer as described later.

[Table 1]

Table 1

| | | Compound name | Chemical formula, characteristics, manufacturer, etc. |
|---|---|---|---|
| (A) | Curable polyorganosiloxane | Silanol group-containing polyorganosiloxane | $HO-[Si(CH_3)_2-O-]n-H$<br>Weight average molecular weight=28,500, Viscosity: 2,100 mPa·s |
| | Curable polyorganosiloxane | Oxime silyl group-containing polyorganosiloxane 1 | $(MEKO)_2(CH_2-CH-)SiO-[Si(CH_3)_2-O-]n-Si(CH=CH_2)(MEKO)_2$<br>Weight average molecular weight=35,000, Viscosity: 1,500 mPa·s |
| | Curable polyorganosiloxane | Oxime silyl group-containing polyorganosiloxane 2 | $(MIBKO)_2(CH_2=CH-)SiO-[Si(CH_3)_2-O-]n-Si(CH=CH_2)(MIBKO)_2$<br>Weight average molecular weight=35,000, Viscosity: 1,500 mPa·s |
| (G) | Silica particles | Surface-untreated silica particles | "AEROSIL 200" from NIPPON AEROSIL CO., LTD. |
| | | Hydrophobically treated silica particles | "AEROSIL RX200" from NIPPON AEROSIL CO., LTD. |
| Kneaded product (1) of (A) and (G) | | Kneaded product of silanol group-containing polyorganosiloxane and hydrophobically treated silica particles<br>Amount of ingredient (G) relative to 100 parts by mass of ingredient (A)=10 parts by mass, Viscosity=5,000 mPa·s | |
| Kneaded product (2) of (A) and (G) | | Kneaded product of oxime group-containing polyorganosiloxane 1 and surface-untreated silica particle<br>Amount of ingredient (G) relative to 100 parts by mass of ingredient (A)=10 parts by mass, Viscosity=40 Pa·s | |
| Kneaded product (3) of (A) and (G) | | Kneaded product of oxime group-containing polyorganosiloxane 2 and surface-untreated silica particles<br>Amount of ingredient (G) relative to 100 parts by mass of ingredient (A)=10 parts by mass, Viscosity=25 Pa·s | |
| Kneaded product (4) of (A) and (G) | | Kneaded product of oxime group-containing polyorganosiloxane 1 and hydrophobically treated silica particles<br>Amount of ingredient (G) relative to 100 parts by mass of ingredient (A)=10 parts by mass, Viscosity=800 Pa·s | |

(continued)

| | Compound name | Chemical formula, characteristics, manufacturer, etc. |
|---|---|---|
| Kneaded product (5) of (A) and (G) | Kneaded product of oxime group-containing polyorganosiloxane 2 and hydrophobically treated silica particles<br>Amount of ingredient (G) relative to 100 parts by mass of ingredient (A)=10 parts by mass, Viscosity=350 Pa·s | |

(2) Ingredients of Antifouling Coating Composition

The ingredients used in the antifouling coating composition are shown in Table 2. The kinetic viscosities in Table 2 are each a value at 25°C and were measured according to JIS Z 8803:2011.

[Table 2]

Table 2

| | | Compound name | Chemical formula, characteristics, manufacturer, etc. |
|---|---|---|---|
| (B) | Pyrithione metal salt | Copper pyrithione 1 | "Copper Omadine Powder" from arxada Cu $(-S-C_5H_4N-O-)_2$<br>Median diameter D50: 1.7 um |
| | | Zinc pyrithione | "Zinc Omadine Powder" from arxada Zn $(-S-C_5H_4N-O-)_2$<br>Median particle diameter D50: 2.4 um |
| (B') | Pyrithione metal salt | Copper pyrithione 2 | "Copper Omadine Powder" from arch Cu $(-S-C_5H_4N-O-)_2$<br>Median particle diameter D50: 5.0 um |
| (C) | Oxidized polyethylene wax | Oxidized polyethylene wax | "ASA-D-120" from ITOH OIL CHEMICALS CO. ,LTD. (Nonvolatile content: 20%)<br>(Acid value: 5.5 mgKOH/g, Solid content acid value: 27.5 mgKOH/g) |
| (D) | Slipping agent | Phenyl-modified silicone (d1) | "KF-50-3,000cs" from Shin-Etsu Chemical Co., Ltd. Phenyl-modification rate: 5%, Kinetic viscosity(25°C): 3,000 $mm^2/s$ |
| | | Phenyl-modified silicone (d2) | "KF-50-100cs" from Shin-Etsu Chemical Co., Ltd. Phenyl-modification rate: 5%, Kinetic viscosity (25°C): 100 $mm^2/s$ |
| | | Polyether-modified silicone 1 (d3) | 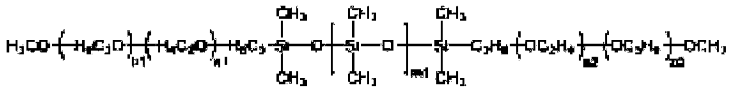<br>a1+a2=8, b1+b2=18, m1=38, a1,a2,b1,b2≧1<br>Kinetic viscosity: 390$mm^2/s$ |
| | | Polyether-modified silicone 2 (d3) | 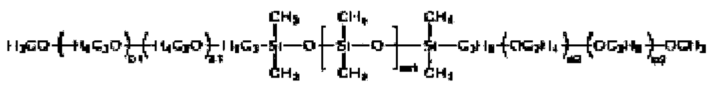<br>a1+a2=19, b1+b2=8, m1=21, a1,a2,b1,b2≧1<br>Kinetic viscosity: 220$mm^2/s$ |
| | | Polyglycerol ester (d5) | "S-face IS-1005P" from Sakamoto Yakuhin Kogyo Co., Ltd. Polyglyceryl pentaisostearate-10 |
| | | Silicone oil (d6) | "KF-96-100cs" from Shin-Etsu Chemical Co., Ltd. Polydimethylsiloxane, Kinetic viscosity (25°C): 100 $mm^2/s$ |

(continued)

| | | Compound name | Chemical formula, characteristics, manufacturer, etc. |
|---|---|---|---|
| (E) | Coloring pigment | Red iron oxide | "Red Iron Oxide KN-V" from TODA KOGYO CORP. |
| | | Naphthol red | "Novopenn Red F5RK" from Hanzhou Baihe Clariant Pigments Co., Ltd |
| | | Phthalocyanine blue | "Cyanine blue AD-6" from TOYOCOLOR CO., LTD. |
| | | Black iron oxide | "TODA COLOR KN-320" from TODA KOGYO CORP. |
| | | Carbon black | "Mitsubishi Carbon Black MA100" from Mitsubishi Chemical Corporation |
| | | Titanium oxide | "TITONE R-5N" from SAKAI CHEMICAL INDUSTRY CO., LTD. |
| (F) | Organic solvent | Xylene | |
| | | n-Butanol | |
| | | Acetylacetone | "Acetylacetone" from Daicel Corporation |
| (H) | Curing catalyst | Dibutyltin dilaurate | "Gleck TL" from DIC Corporation |
| | | Carboxylic acid metal salt (Main metal complex: Li, Zn) | "K-KAT XK-618" from KING INDUSTRIES (Nonvolatile content: 60%) |
| | | Tertiary amine | "Ancamine K54" from Evonik Japan tris-2,4,6-dimethylaminomethylphenol |
| (I) | Organic silicon crosslinking agent | Organosilane partially hydrolyzed condensate | "WACKER SILICATE TES 40 WN" from Wacker Asahikasei Silicone Co., Ltd. $H_5C_2O\text{-}[Si(OC_2H_5)_2\text{-}O\text{-}]t\text{-}C_2H_5$ |

(3) Synthetic Example 1 (Acrylic Resin having Hydrophilic Group (d-4))

A reaction was conducted at an ordinary pressure and in a nitrogen atmosphere. Into a reaction vessel equipped with a stirrer, a reflux condenser, a thermometer, a nitrogen introducing tube, and a dropping funnel, 42.86 parts by mass of methyl amyl ketone was put, and was heated with stirring until the temperature of methyl amyl ketone reached 100°C. A mixture constituted of 40.0 parts by mass of NK ester AM-90G (methoxy polyethylene glycol acrylate, average number of polyethylene glycol units: 9, manufactured by SHIN-NAKAMURA CHEMICAL CO, LTD.), 60.0 parts by mass of isobutyl acrylate, and 4.0 parts by mass of 2,2'-azobis(2-methylbutyronitrile) were dropwise added into the reaction vessel over 4 hours while keeping the temperature of the reaction mixture at 100±5°C. After that, stirring was continued for 2 hours while keeping the temperature at 100±5°C, thereby obtaining a solution of a polymer (d-4). The solid content of the resulting solution was 70.3% by mass, the viscosity thereof was 109 m Pa·s, and the weight average molecular weight (Mw) of the polymer (d-4) was 9,100.

The properties of the polymer (d-4) were measured as follows.

[Solid Content of Polymer Solution]

The solid content (% by mass) was determined by dividing the mass of the solid content obtained by drying a polymer solution at 108°C and 1 atom for 3 hours by the mass of the polymer solution before drying.

[Viscosity of Polymer Solution]

The viscosity (mPa·s) of a polymer solution at a liquid temperature of 25°C was measured with an E-type viscometer (TV-25, manufactured by Toki Sangyo Co., Ltd.).

[Average Molecular Weight of Polymer]

The weight average molecular weight (Mw) of a polymer was measured by gel permeation chromatography (GPC) under the following conditions.

< GPC Conditions>

Apparatus: "HLC-8420GPC" (manufactured by TOSOH CORPORATION)
Column: "TSKgel SuperH2000" and "TSKgel SuperH4000" (both manufactured by TOSOH CORPORATION, 6 mm (inner diameter), 15 cm (length)) were connected.
Eluent: tetrahydrofuran (THF)
Flow rate: 0.600 mL/min
Detector: RI
Column thermostat temperature: 40°C
Standard substrate: polystyrene
Sample preparation method: THF was added to a polymer solution, which was filtered with a membrane filter to prepare a sample for GPC measurement.

[Examples 1 to 25, Comparative Examples 1 to 3, Reference Examples 1 to 2]

(1) Preparation of Antifouling Coating Composition

The ingredients were mixed and stirred according to the blending amounts (parts by mass) shown in Table 3, whereby a three-component type coating composition including a base component, a curing agent component, and an additive component, or a one-component type coating composition was prepared. In the case of coating with a three-component type coating composition, the components were sufficiently mixed with stirring into a uniform state with a disperser, before use.

More specifically, in the base component of a three-component type coating composition, the ingredients other than the curable polyorganosiloxane (A) and the kneaded product of the curable polyorganosiloxane (A) and the silica particles (G) were mixed and stirred with 10 parts by mass of xylene to prepare a mixture A, and the curable polyorganosiloxane (A), the kneaded product of the curable polyorganosiloxane (A) and the silica particles (G), and the remaining xylene were mixed with stirring, whereby an antifouling coating composition was prepared.

In the case of a one-component type coating composition, the ingredients other than the curable polyorganosiloxane (A), the kneaded product of the curable polyorganosiloxane (A) and the silica particles (G), and the slipping agent (D) were mixed and stirred with 10 parts by mass of xylene to prepare a mixture A, and then, the curable polyorganosiloxane (A), the kneaded product of the curable polyorganosiloxane and the silica particles (G), the slipping agent (D), and the remaining xylene were mixed with stirring, whereby an antifouling coating composition was prepared.

(2) Production of Substrate with Coating Film (Test Specimen)

A sand-blasted plate coated with an epoxy based anticorrosion coating material ("BANNOH 500", manufactured by Chugoku Marine Paints, Ltd.) was coated with an intermediate coating composition ("CMP BIOCLEAN TIE COAT ", available from Chugoku Marine Paints, Ltd.) so as to give a thickness after drying (curing) of 100 μm, followed by drying at normal temperature for 24 hours, and then, was coated with each coating composition of Examples, Comparative Examples, and Reference Examples at normal temperature so as to give a thickness after drying (curing) of 200 μm. After one week at normal temperature, a test plate with a coating film was obtained.

(3) Evaluation Methods

[Median Diameter (D50) of Pyrithione Metal Salt in Coating Composition]

A coating film of each coating composition was produced, and was subjected to a measurement with a desktop SEM apparatus (apparatus name: Miniscope (registered trade name) TM3030 Plus (manufactured by Hitachi High-Tech Corporation).

(Production of Coating Film)

A tin plate was coated with each coating composition of Examples, Comparative Examples, and Reference Examples so as to give a thickness after drying (curing) of 200 μm, and was dried at normal temperature for one day, whereby a coating film was obtained.

(Measurement Method)

The produced coating film was cut with a single edge defined in JIS K 5600-5-6, and the surface or cross section of the coating film was observed at a magnification of ×1000 with the desktop SEM apparatus. The maximum particle diameters of 50 particles of the pyrithione metal salt visible in an observation field were measured, and the average of the maximum particle diameters measured was taken as the median diameter of the pyrithione metal salt in the coating composition.

[Median Diameter (D50) of Pyrithione Metal Salt That is Raw Material]

Median diameter (D50) of pyrithione metal salt that is raw material was measured with a laser diffraction scattering particle diameter distribution analyzer (MT3300EX II manufactured by MicrotracBEL Corp).

(Measurement Method)

Several drops of a dispersion medium (0.2% aqueous sodium hexametaphosphate solution) were added to water, and the pyrithione metal salt was added thereto and was ultrasonically dispersed for approximately 5 minutes, and the dispersion was performed further in the apparatus for approximately 10 minutes, and then, the median diameter was measured.

[Viscosity]

The mixture A of each composition was subjected to measurement with a Stormer viscometer (manufacturer: Taiyu Kizai, product name: Stormer Viscometer, model: 691) under a temperature condition of 23°C.
A lower Stormer viscosity means a superior production workability.

[Storage Stability]

A base component in the case of a multi-component type kit, and a coating composition in the case of a one-component type, was prepared, and then, was stored under a temperature condition of 50°C for 30 days, and thereafter, the following properties were checked to evaluate the storage stability of the coating material.

<Anti-Sagging Property>

Each composition was applied on a tin plate on a horizontal table using a box-type sag tester shown in JIS K 5400 (1990) 6.4, and the film thickness was measured with a wet film gauge. Then, the test plate was immediately erected vertically so that the orbit line of the sag tester became horizontal, and the anti-sagging property of the film was measured.
Such a coating layer that a sample flowing into a space between the coating layers occupied 1/2 of the space was considered as available, and the anti-sagging limit film thickness of each composition was calculated.

<Coating Film Appearance>

The anti-sagging property was measured immediately after preparation and after storage under a temperature condition of 50°C for 30 days, and thereafter, the state of the coating film appearance of each test plate was visually evaluated.

3: A good coating film surface kept with no aggregate found
2: The state of coating film surface not changed although with an aggregate found
1: An abnormal state of coating film surface found with an aggregate found

[Evaluation of Dynamic Antifouling Performance]

The test plate mounted on a side surface of a rotor tester was immersed in the actual sea water off the coast of Kure City, Hiroshima Prefecture, and was rotated at a rate providing approximately 15 knot. The test plate was disposed in such a manner that the test surface was sufficiently exposed to sunlight, which was a condition likely causing slime. After 6 months, the ratio of the area having slime adhered thereto with respect to the antifouling film surface of of the test plate was evaluated through visual observation. The dynamic antifouling performance was evaluated according to the following evaluation criteria.

(Criteria of Antifouling Performance)

5: No slime adhered
4: Adhered area of slime of 20% or more and less than 40% based on the total test area
3: Adhered area of slime of 40% or more and less than 60% based on the total test area
2: Adhered area of slime of 60% or more and less than 80% based on the total test area
1: Adhered area of slime of 80% or more based on the total test area

[Table 3-1]

Table 3-1

| | | | Example | | | | | | | | | |
|---|---|---|---|---|---|---|---|---|---|---|---|---|
| | | | 1 | 2 | 3 | 4 | 5 | 6 | 7 | 8 | 9 | 10 |
| Base | (A) | Curable polyorganosiloxane | 20.0 | 20.0 | 17.0 | 17.0 | 21.0 | 21.0 | 18.0 | 18.0 | 16.0 | 16.0 |
| | (A) and (G) | Curable polyorganosiloxane / hydrophobically treated silica kneaded product (1) | 30.0 | 30.0 | 30.0 | 30.0 | 30.0 | 30.0 | 30.0 | 30.0 | 30.0 | 30.0 |
| | (B) | Copper pyrithione 1 | 5.0 | 4.9 | 5.0 | 5.0 | 5.0 | 5.0 | 5.0 | 5.0 | 5.0 | 9.0 |
| | | Zinc pyrithione | | 0.1 | | | | | | | | |
| | (B') | Copper pyrithione 2 | | | | | | | | | | |
| | (C) | Oxidized polyethylene wax | 2.0 | 2.0 | 2.0 | 2.0 | 2.0 | 2.0 | 2.0 | 2.0 | 2.0 | 2.0 |
| | (D) | Acrylic polymer having hydrophilic group (d4) | | | | | | | | | | |
| | (E) | Red iron oxide | 3.0 | 3.0 | 3.0 | 3.0 | 3.0 | 3.0 | 3.0 | | | 3.0 |
| | | Naphthol red | 0.3 | 0.3 | 0.3 | 0.3 | 0.3 | 0.3 | 0.3 | | | 0.3 |
| | | Black iron oxide | | | | | | | | 3.0 | | |
| | | Carbon black | | | | | | | | 1.0 | | |
| | | Phthalocyanine blue | | | | | | | | | 5.0 | |
| | | Titanium oxide | | | | | | | | | 1.5 | |
| | (F) | Xylene | 14.7 | 14.7 | 14.7 | 14.7 | 14.7 | 14.7 | 14.7 | 16.0 | 15.5 | 14.7 |
| | Subtotal of base component (parts by mass) | | 75.0 | 75.0 | 72.0 | 72.0 | 76.0 | 76.0 | 73.0 | 75.0 | 75.0 | 75.0 |
| Curing agent | (D) | Phenyl-modified silicone (d1) | 5.0 | 5.0 | 5.0 | 5.0 | 5.0 | 5.0 | 5.0 | 5.0 | 5.0 | 5.0 |
| | | Polyether-modified silicone 1 (d3) | | | | | 0.5 | | | | | |
| | | Polyether-modified silicone 2 (d3) | | | | | | 0.5 | | | | |
| | (I) | Organosilane partially hydrolyzed condensate | 3.0 | 3.0 | 5.0 | 5.0 | 3.0 | 3.0 | 3.0 | 3.0 | 3.0 | 3.0 |
| | (H) | Dibutyltin dilaurate | 0.5 | 0.5 | | | 0.5 | 0.5 | 0.5 | 0.5 | 0.5 | 0.5 |
| | | Carboxylic acid metal salt | | | 2.0 | 2.0 | | | | | | |
| | | Tertiary amine | | | | 0.5 | | | | | | |

(continued)

| | | | | Example | | | | | | | | | |
|---|---|---|---|---|---|---|---|---|---|---|---|---|---|
| | | | | 1 | 2 | 3 | 4 | 5 | 6 | 7 | 8 | 9 | 10 |
| | (F) | Acetylacetone | | 4.5 | 4.5 | | | 4.5 | 4.5 | 4.5 | 4.5 | 4.5 | 4.5 |
| | | n-Butanol | | | | 6.0 | 5.5 | | | | | | |
| | | Xylene | | 2.0 | 2.0 | | | 3.5 | 3.5 | 2.0 | 2.0 | 2.0 | 2.0 |
| | Subtotal of curing agent component (parts by mass) | | | 15.0 | 15.0 | 18.0 | 18.0 | 17.0 | 17.0 | 15.0 | 15.0 | 15.0 | 15.0 |
| Additive | (D) | Acrylic polymer having hydrophilic group (d4) | | 8.0 | 8.0 | 8.0 | 8.0 | 5.0 | 5.0 | 5.0 | 8.0 | 8.0 | 8.0 |
| | | Polyglycerol ester (d5) | | | | | | | | 5.0 | | | |
| | (F) | Xylene | | 2.0 | 2.0 | 2.0 | 2.0 | 2.0 | 2.0 | 2.0 | 2.0 | 2.0 | 2.0 |
| | Subtotal of additive component (parts by mass) | | | 10.0 | 10.0 | 10.0 | 10.0 | 7.0 | 7.0 | 12.0 | 10.0 | 10.0 | 10.0 |
| Total (parts by mass) | | | | 100.0 | 100.0 | 100.0 | 100.0 | 100.0 | 100.0 | 100.0 | 100.0 | 100.0 | 100.0 |
| (B) Pyrithione metal salt | Median diameter (D50) of raw material [μm] | | | 1.6 | 1.6 | 1.6 | 1.6 | 1.6 | 1.6 | 1.6 | 1.6 | 1.6 | 1.6 |
| | Median diameter (D50) in coating composition [μm] | | | 3.9 | 4.0 | 3.6 | 3.7 | 4.1 | 4.1 | 3.8 | 4.0 | 3.6 | 4.1 |
| Mill base | Production workability | Stormer viscosity: [KU] | | 53 | 52 | 53 | 53 | 53 | 53 | 53 | 55 | 54 | 53 |
| Coating properties | Storage stability | Immediately after preparation | Anti-sagging property Wet film thickness at sagging limit [μm] | 400 | 400 | 400 | 400 | 400 | 400 | 400 | 400 | 400 | 400 |
| | | | Coating film appearance | 3 | 3 | 3 | 3 | 3 | 3 | 3 | 3 | 3 | 3 |
| | | After test at 50°C for 30 days | Anti-sagging property Wet film thickness at sagging limit [μm] | 400 | 400 | 400 | 400 | 400 | 400 | 400 | 400 | 400 | 400 |
| | | | Coating film appearance | 3 | 3 | 3 | 3 | 3 | 3 | 3 | 3 | 3 | 3 |
| Antifouling performance | Dynamic antifouling performance | After 6 months | | 5 | 5 | 5 | 5 | 5 | 5 | 5 | 5 | 5 | 5 |
| | | After 12 months | | 5 | 5 | 5 | 5 | 5 | 5 | 5 | 5 | 5 | 5 |
| | | | | Example | | | | | | | Comparative Example | | Reference Example |
| | | | | 11 | 12 | 13 | 14 | 15 | 16 | 17 | 1 | 2 | 1 |
| Base | (A) | Curable polyorganosiloxane | | 25.0 | 19.0 | 20.0 | 20.0 | 20.0 | 17.0 | 15.0 | 22.0 | 22.0 | 20.0 |

(continued)

| | | | Example | | | | | | | Comparative Example | | Reference Example |
|---|---|---|---|---|---|---|---|---|---|---|---|---|
| | | | 11 | 12 | 13 | 14 | 15 | 16 | 17 | 1 | 2 | 1 |
| | (A) and (G) | Curable polyorganosiloxane / hydrophobically treated silica kneaded product (1) | 30.0 | 30.0 | 30.0 | 30.0 | 30.0 | 30.0 | 30.0 | 30.0 | 30.0 | 30.0 |
| | (B) | Copper pyrithione 1 | 0.9 | 5.0 | 5.0 | 5.0 | 5.0 | 5.0 | 5.0 | 5.0 | 5.0 | |
| | | Zinc pyrithione | | | | | | | | | | |
| | (B') | Copper pyrithione 2 | | | | | | | | | | 5.0 |
| | (C) | Oxidized polyethylene wax | 1.0 | 3.0 | 1.0 | 0.5 | 2.0 | 5.0 | 7.0 | | | |
| | (D) | Acrylic polymer having hydrophilic group (d4) | | | | | 8.0 | | | | | |
| | (E) | Red iron oxide | 3.0 | 3.0 | 3.0 | 3.0 | 3.0 | 3.0 | 3.0 | 3.0 | 3.0 | 5.0 |
| | | Naphthol red | 0.3 | 0.3 | 0.3 | 0.3 | 0.3 | 0.3 | 0.3 | | 0.3 | |
| | | Black iron oxide | | | | | | | | | | |
| | | Carbon black | | | | | | | | | | |
| | | Phthalocyanine blue | | | | | | | | | | |
| | | Titanium oxide | | | | | | | | | | |
| | (F) | Xylene | 14.8 | 14.7 | 15.7 | 16.2 | 16.7 | 14.7 | 14.7 | 15.0 | 14.7 | 15.0 |
| | Subtotal of base component (parts by mass) | | 75.0 | 75.0 | 75.0 | 75.0 | 85.0 | 75.0 | 75.0 | 75.0 | 75.0 | 75.0 |
| Curing agent | (D) | Phenyl-modified silicone (d1) | 5.0 | 5.0 | 5.0 | 5.0 | 5.0 | 5.0 | 5.0 | 5.0 | 5.0 | 5.0 |
| | | Polyether-modified silicone 1 (d3) | | | | | | | | | | |
| | | Polyether-modified silicone 2 (d3) | | | | | | | | | | |
| | (I) | Organosilane partially hydrolyzed condensate | 3.0 | 3.0 | 3.0 | 3.0 | 3.0 | 3.0 | 3.0 | 3.0 | 3.0 | 3.0 |
| | (H) | Dibutyltin dilaurate | 0.5 | 0.5 | 0.5 | 0.5 | 0.5 | 0.5 | 0.5 | 0.5 | 0.5 | 0.5 |
| | | Carboxylic acid metal salt | | | | | | | | | | |
| | | Tertiary amine | | | | | | | | | | |
| | (F) | Acetylacetone | 4.5 | 4.5 | 4.5 | 4.5 | 4.5 | 4.5 | 4.5 | 4.5 | 4.5 | 4.5 |
| | | n-Butanol | | | | | | | | | | |
| | | Xylene | 2.0 | 2.0 | 2.0 | 2.0 | 2.0 | 2.0 | 2.0 | 2.0 | 2.0 | 2.0 |

(continued)

| | | | | Example | | | | | | | Comparative Example | | Reference Example |
|---|---|---|---|---|---|---|---|---|---|---|---|---|---|
| | | | | 11 | 12 | 13 | 14 | 15 | 16 | 17 | 1 | 2 | 1 |
| | Subtotal of curing agent component (parts by mass) | | | 15.0 | 15.0 | 15.0 | 15.0 | 15.0 | 15.0 | 15.0 | 15.0 | 15.0 | 15.0 |
| Additive | (D) | Acrylic polymer having hydrophilic group (d4) | | 8.0 | 8.0 | 8.0 | 8.0 | | 8.0 | 8.0 | 8.0 | 8.0 | 8.0 |
| | | Polyglycerol ester (d5) | | | | | | | | | | | |
| | (F) | Xylene | | 2.0 | 2.0 | 2.0 | 2.0 | | 2.0 | 2.0 | 2.0 | 2.0 | 2.0 |
| | Subtotal of additive component (parts by mass) | | | 10.0 | 10.0 | 10.0 | 10.0 | | 10.0 | 10.0 | 10.0 | 10.0 | 10.0 |
| Total (parts by mass) | | | | 100.0 | 100.0 | 100.0 | 100.0 | 100.0 | 100.0 | 100.0 | 100.0 | 100.0 | 100.0 |
| (B) Pyrithione metal salt | Median diameter (D50) of raw material [μm] | | | 1.6 | 1.6 | 1.6 | 1.6 | 1.6 | 1.6 | 1.6 | 1.6 | 1.6 | 5.0 |
| | Median diameter (D50) in coating composition [μm] | | | 2.9 | 3.6 | 3.7 | 3.8 | 3.5 | 3.9 | 3.7 | 3.3 | 3.2 | 5.7 |
| Mill base | Production workability | Stormer viscosity: [KU] | | 42 | 53 | 54 | 54 | 54 | 54 | 56 | 94 | 79 | 70 |
| Coating properties | Storage stability | Immediately after preparation | Anti-sagging property Wet film thickness at sagging limit [μm] | 400 | 400 | 400 | 400 | 400 | 400 | 400 | 400 | 400 | 400 |
| | | | Coating film appearance | 3 | 3 | 3 | 3 | 3 | 3 | 3 | 3 | 3 | 3 |
| | | After test at 50°C for 30 days | Anti-sagging property Wet film thickness at sagging limit [μm] | 400 | 400 | 350 | 300 | 400 | 400 | 400 | 200 | 150 | 300 |
| | | | Coating film appearance | 3 | 3 | 3 | 2 | 3 | 3 | 3 | 2 | 1 | 3 |
| Antifouling performance | Dynamic antifouling performance | After 6 months | | 5 | 5 | 5 | 5 | 5 | 5 | 5 | 5 | 5 | 5 |
| | | After 12 months | | 4 | 5 | 5 | 5 | 5 | 5 | 5 | 5 | 5 | 5 |

[Table 3-2]

Table 3-2

| | | | Example | | | | | | | | Comparative Example | Reference Example |
|---|---|---|---|---|---|---|---|---|---|---|---|---|
| | | | 18 | 19 | 20 | 21 | 22 | 23 | 24 | 25 | 3 | 2 |
| Coating composition | (A) and (G) | Oxime silyl group-containing polyorganosiloxane 1 / surface-untreated silica particles kneaded product (2) | 40.0 | | | | | | | | 40.0 | 40.0 |
| | (A) and (G) | Oxime silyl group-containing polyorganosiloxane 2 / surface-untreated silica particles kneaded product (3) | | 40.0 | 40.0 | 40.0 | 40.0 | 40.0 | 40.0 | 40.0 | | |
| | (A) and (G) | Oxime silyl group-containing polyorganosiloxane 1 / hydrophobically treated silica particles kneaded product (4) | 15.0 | | | | | | | | 15.0 | 15.0 |
| | (A) and (G) | Oxime silyl group-containing polyorganosiloxane 2 / hydrophobically treated silica particles kneaded product (5) | | 15.0 | 15.0 | 15.0 | 15.0 | 15.0 | 15.0 | 15.0 | | |
| | (B) | Copper pyrithione 1 | 7.0 | 7.0 | 7.0 | 7.0 | 7.0 | 7.0 | 7.0 | 7.0 | 7.0 | |
| | (B') | Copper pyrithione 2 | | | | | | | | | | 7.0 |
| | (C) | Oxidized polyethylene wax | 2.0 | 2.0 | 2.0 | 1.0 | 1.0 | 1.0 | 1.0 | 1.0 | | |
| | (D) | Phenyl-modified silicone (d1) | 5.0 | 5.0 | | | | | | 5.0 | 5.0 | 5.0 |
| | | Phenyl-modified silicone (d2) | | | 15.0 | 15.0 | 15.0 | 5.0 | 5.0 | | | |
| | | Polyether-modified silicone 1 (d3) | | | | 0.5 | | 0.9 | | | | |
| | | Polyether-modified silicone 2 (d3) | | | | | 0.5 | | 0.9 | | | |
| | | Acrylic polymer having hydrophilic group (d4) | | | 1.0 | 1.0 | 1.0 | 9.0 | 9.0 | | | |
| | | Silicone oil (d6) | 3.0 | 3.0 | | | | | | 3.0 | 3.0 | 3.0 |
| | (E) | Red iron oxide | 3.0 | 3.0 | 3.0 | 3.0 | 3.0 | 3.0 | 3.0 | 0.5 | 3.0 | 5.0 |
| | | Titanium oxide | | | | | | | | 2.5 | | |
| | | Naphthol red | 0.3 | 0.3 | 0.3 | 0.3 | 0.3 | 0.3 | 0.3 | 0.3 | 0.3 | |
| | (I) | Organosilane partially hydrolyzed condensate | 0.5 | 0.5 | 0.5 | 0.5 | 0.5 | 0.5 | 0.5 | 0.5 | 0.5 | 0.5 |
| | (F) | Xylene | 24.2 | 24.2 | 16.2 | 16.7 | 16.7 | 18.3 | 18.3 | 25.2 | 26.2 | 24.5 |
| Total (parts by mass) | | | 100.0 | 100.0 | 100.0 | 100.0 | 100.0 | 100.0 | 100.0 | 100.0 | 100.0 | 100.0 |

(continued)

| | | | | Example | | | | | | | | Comparative Example | Reference Example |
|---|---|---|---|---|---|---|---|---|---|---|---|---|---|
| | | | | 18 | 19 | 20 | 21 | 22 | 23 | 24 | 25 | 3 | 2 |
| (B) Pyrithione metal salt | Median diameter (D50) of raw material [μm] | | | 1.6 | 1.6 | 1.6 | 1.6 | 1.6 | 1.6 | 1.6 | 1.6 | 1.6 | 5.0 |
| | Median diameter (D50) in coating composition [μm] | | | 4.3 | 4.2 | 4.0 | 3.9 | 4.1 | 4.3 | 4.2 | 4.4 | 4.5 | 7.9 |
| Mill base | Production workability | Stormer viscosity: [KU] | | 59 | 59 | 59 | 45 | 45 | 65 | 65 | 65 | 90 | 60 |
| Coating properties | Storage stability | Immediately after preparation | Anti-sagging property Wet film thickness at sagging limit [μm] | 400 | 400 | 400 | 400 | 400 | 400 | 400 | 400 | 300 | 300 |
| | | | Coating film appearance | 3 | 3 | 3 | 3 | 3 | 3 | 3 | 3 | 3 | 3 |
| | | After test at 50°C for 30 days | Anti-sagging property Wet film thickness at sagging limit [μm] | 400 | 400 | 400 | 400 | 400 | 400 | 400 | 400 | 200 | 300 |
| | | | Coating film appearance | 3 | 3 | 3 | 3 | 3 | 3 | 3 | 3 | 2 | 3 |
| | Dynamic antifouling performance | 6 Months | | 5 | 5 | 5 | 5 | 5 | 5 | 5 | 5 | 5 | 5 |
| | | 12 Months | | 4 | 4 | 5 | 5 | 5 | 5 | 5 | 4 | 4 | 4 |

According to Examples, an antifouling coating film superior in the antifouling performance was obtained from an antifouling coating composition containing the curable polyorganosiloxane (A), the pyrithione metal salt (B), and the oxidized polyethylene wax (C), and satisfying at least one of the Conditions A and B. In addition, the mill base had a low Stormer viscosity and was superior in the production workability. Furthermore, an antifouling coating composition superior in the storage stability so that the anti-sagging property was maintained and aggregation of the coating material was prevented even after storage, resulting in providing an antifouling coating film superior in the appearance, was obtained.

On the other hand, as shown in Comparative Examples 1 to 3, in an antifouling coating composition not containing the oxidized polyethylene wax (C) in which a pyrithione metal salt satisfying at least one of the Conditions A and B was used as the pyrithione metal salt (B), an antifouling coating film superior in the antifouling performance was obtained but the mill base had a high Stormer viscosity and was inferior in the production workability. In addition, after storage, the anti-sagging property lowered and the coating film appearance also lowered with an aggregate generated in the antifouling coating composition.

## Claims

1. An antifouling coating composition comprising a curable polyorganosiloxane (A), a pyrithione metal salt (B), and an oxidized polyethylene wax (C),
the antifouling coating composition satisfying at least one of the following Conditions A and B:

    Condition A: the pyrithione metal salt (B) in the antifouling coating composition has a median diameter (D50) of 5.0 μm or less
    Condition B: the pyrithione metal salt (B) that is a raw material has a median diameter (D50) of 3.0 μm or less.

2. The antifouling coating composition according to claim 1, wherein the pyrithione metal salt (B) is copper pyrithione.

3. The antifouling coating composition according to claim 1, further comprising a slipping agent (D).

4. The antifouling coating composition according to claim 1, further comprising a coloring pigment (E).

5. The antifouling coating composition according to claim 4, wherein the coloring pigment (E) contains an organic pigment.

6. The antifouling coating composition according to claim 1, wherein the curable polyorganosiloxane (A) is a compound represented by the following formula (A1):

[Chem. 1]

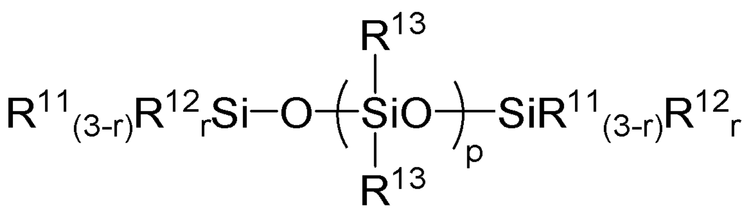

(A1)

wherein $R^{11}$ and $R^{13}$ each independently represent a hydrogen atom, or an alkyl group, an alkenyl group, an aryl group, an aralkyl group, or a halogenated alkyl group each having 1 to 16 carbon atoms, $R^{12}$ each independently represents a hydroxy group or a hydrolyzable group, r represents an integer of 1 to 3, and p represents 10 to 10,000.

7. The antifouling coating composition according to claim 1, wherein a content of the curable polyorganosiloxane (A) is 45% by mass or more and 85% by mass or less in a solid content of the antifouling coating composition.

8. The antifouling coating composition according to claim 1, wherein a content of the pyrithione metal salt (B) is 0.5% by mass or more and 15% by mass or less in a solid content of the antifouling coating composition.

9. The antifouling coating composition according to claim 1, wherein a content of the oxidized polyethylene wax (C) is 0.1% by mass or more and 3.0% by mass or less in a solid content of the antifouling coating composition.

**10.** An antifouling coating film formed from the antifouling coating composition according to any one of claims 1 to 9.

**11.** A substrate with an antifouling coating film, comprising a substrate and the antifouling coating film according to claim 10 provided on a surface of the substrate.

**12.** A method for producing a substrate with an antifouling coating film, the method comprising the following (1-1) and (1-2), or (2-1) and (2-2):

(1-1) a step of coating or impregnating a surface of a substrate with the antifouling coating composition according to any one of claims 1 to 9 to provide a coated article or an impregnated article
(1-2) a step of drying the coated article or impregnated article obtained in the step (1-1) to form an antifouling coating film
(2-1) a step of drying the antifouling coating composition according to any one of claims 1 to 9 to form an antifouling coating film
(2-2) a step of bonding the antifouling coating film obtained in the step (2-1) to a substrate.

**13.** A method for producing the antifouling coating composition according to any one of the claims 1 to 9, the method comprising a Step a and a Step b in this order:

Step a: a step of preparing a mixture A that contains the pyrithione metal salt (B) and the oxidized polyethylene wax (C)
Step b: a step of mixing the mixture A obtained in the Step a and the curable polyorganosiloxane (A) to prepare an antifouling coating composition.

**14.** The method for producing the antifouling coating composition according to claim 13, wherein in the Step a, the pyrithione metal salt (B) that is a raw material has a median diameter (D50) of 3.0 μm or less.

**INTERNATIONAL SEARCH REPORT**

International application No. **PCT/JP2024/009836**

**A. CLASSIFICATION OF SUBJECT MATTER**

***C09D 183/04***(2006.01)i; ***B05D 3/12***(2006.01)i; ***B05D 5/00***(2006.01)i; ***B05D 7/24***(2006.01)i; ***C09D 7/63***(2018.01)i; ***C09D 191/06***(2006.01)i

FI: C09D183/04; C09D7/63; C09D191/06; B05D5/00 H; B05D3/12 C; B05D7/24 303E; B05D7/24 302Y; B05D7/24 302G; B05D7/24 303A

According to International Patent Classification (IPC) or to both national classification and IPC

**B. FIELDS SEARCHED**

Minimum documentation searched (classification system followed by classification symbols)

C09D B05D5/00; C09K3/18

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2021-155728 A (CHUGOKU MARINE PAINTS, LTD.) 07 October 2021 (2021-10-07) claim 1, examples 1-19 | 1-14 |
| Y | JP 2015-42716 A (NITTO KASEI CO., LTD.) 05 March 2015 (2015-03-05) paragraph [0037] | 1-14 |
| Y | JP 2018-62640 A (MITSUBISHI CHEMICAL CORPORATION) 19 April 2018 (2018-04-19) claim 1, paragraphs [0113], [0119] examples 6, 7, 8-10 | 1-14 |
| A | JP 2023-503512 A (JOTUN AS) 30 January 2023 (2023-01-30) entire text | 1-14 |
| A | JP 2016-522848 A (HEMPEL A/S) 04 August 2016 (2016-08-04) entire text | 1-14 |

☐ Further documents are listed in the continuation of Box C.   ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **04 April 2024** | **21 May 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2024/009836**

| Patent document cited in search report | Publication date (day/month/year) | Patent family member(s) | Publication date (day/month/year) |
|---|---|---|---|
| JP 2021-155728 A | 07 October 2021 | CN 113444418 A<br>KR 10-2021-0120867 A | |
| JP 2015-42716 A | 05 March 2015 | (Family: none) | |
| JP 2018-62640 A | 19 April 2018 | WO 2017/065172 A1<br>CN 108137751 A<br>KR 10-2018-0067548 A | |
| JP 2023-503512 A | 30 January 2023 | US 2023/0340278 A1<br>entire text<br>WO 2021/105429 A1<br>EP 3828240 A1<br>CN 114761496 A<br>KR 10-2022-0104224 A | |
| JP 2016-522848 A | 04 August 2016 | US 2016/0083592 A1<br>entire text<br>WO 2014/177159 A1<br>EP 2992056 A1<br>CN 105209557 A<br>KR 10-2016-0003281 A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2014077205 A
- JP 2001139816 A